(19) Europäisches Patentamt
European Patent Office
Office européen des brevets

(11) Publication number: **0 161 053**
**B1**

(12) # EUROPEAN PATENT SPECIFICATION

(45) Date of publication of patent specification: **17.05.89**

(21) Application number: **85302208.5**

(22) Date of filing: **29.03.85**

(51) Int. Cl.⁴: **C 08 L 79/08**, C 08 L 81/06, C 08 J 5/10 // (C08J5/10, C08K7:06, 7:14, 7:20, 7:18, 9:04)

(54) **Injection moldable-polyamide-imide containing aromatic sulfone polymers.**

(30) Priority: **30.03.84 US 595272**

(43) Date of publication of application:
**13.11.85 Bulletin 85/46**

(45) Publication of the grant of the patent:
**17.05.89 Bulletin 89/20**

(84) Designated Contracting States:
**AT BE CH DE FR GB IT LI LU NL SE**

(56) References cited:
**DE-A-1 769 943**
**US-A-3 658 938**
**US-A-4 340 697**

**The file contains technical information submitted after the application was filed and not included in this specification**

(73) Proprietor: **AMOCO CORPORATION**
**200 East Randolph Drive**
**Chicago Illinois 60601 (US)**

(72) Inventor: **Brooks, Gary Thomas**
**5 S. 225 Radcliff**
**Naperville Illinois 60540 (US)**

(74) Representative: **Ritter, Stephen David et al**
**Mathys & Squire 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the Invention

The field of this invention relates to polyamideimide copolymers containing aromatic sulfone polymers and to molding powders and molded articles prepared therefrom.

Background:

Polyamide-imide (PAI) polymers are a relatively new class of organic compounds known for their solubility in nitrogen-containing organic solvents when in the largely polyamide form. The major application of the amide-imide polymers has been as wire enamels. This is illustrated in U.S. Pat. Nos. 3,661,832 (1972), 3,494,890 (1970) and 3,347,828 (1967).

Compositions prepared from isophthalic acid and diamines and aliphatic diamines have found application in coatings and films. The prior art on this is summarized in U.S. Pat. No. 3,444,183 (1969).

Reinforced polyhexamethylene isophthalamides have been used to produce articles as disclosed in U.S. Pat. No. 4,118,364 (1978). However, the physical properties of these reinforced polyhexamethylene isophthalamides are insufficent for use in engineering plastics since their tensile strength and the continuous service temperature do not meet these required for engineering plastics.

Polyamide-imides are very rigid polymers which sometimes lack the inherent toughness needed to compete in those applications which require elevated temperature resistance and good impact strength. The lack of matrix toughness can cause problems when molding thick cross-sectional parts, especially with the filled polyamide-imide-phthalamide copolymers since the polymer matrix is not tough enough to resist the molding cooldown stresses which can result in internal cracks. The art has been looking for improvements in the impact resistance and toughness of the polymer but it is essential that the additive not impair the excellent curing characteristics of the PAI or its thermal and strength properties, particularly the heat deflection temperature and tensile strength.

According to the present invention there is provided a composition comprising (a) about 99.9 to about 50 per cent by weight of an amide-imide phthalamide copolymer which comprises recurring polyamide A units of:

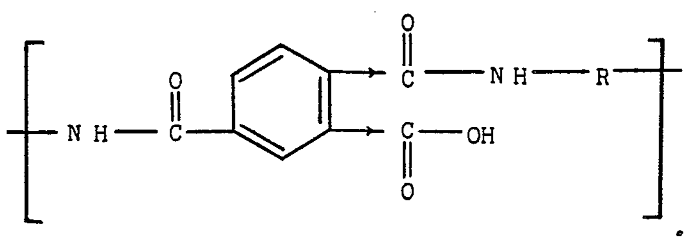

which are capable of undergoing imidization, and polyamide B units of:

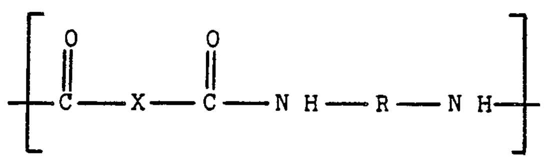

wherein the molar ratio of A units to B units is about 80 to about 20 to about 20 to about 80, wherein the R groups in the copolymer, which may be the same or different are selected from divalent aromatic hydrocarbon radicals and wherein the X groups, which may be the same or different are selected from divalent aromatic radicals and → denotes isomerization and (b) about 0.1 to about 50 per cent by weight of one or more polyethersulfones which comprise recurring units of:

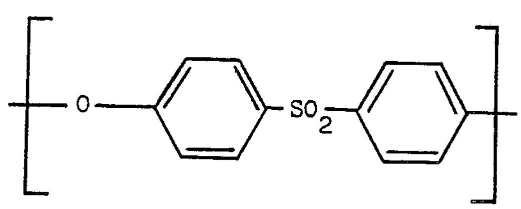

such weight per cents being based on the total weight of (a) and (b).

Specific examples of amide-imide phthalamide copolymers include (1) ones wherein each R is selected from

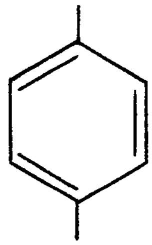 and 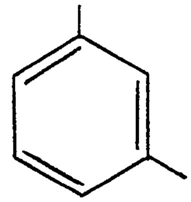 groups

(2) ones wherein X is selected from

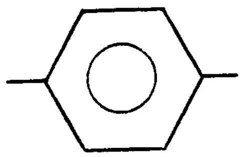 and 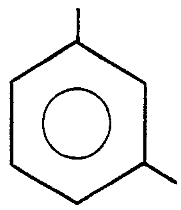 groups

and (3) ones wherein X is

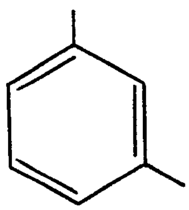 and R is 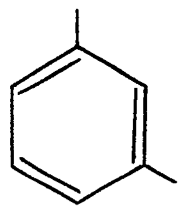

The compositions of the invention are suitable for use as engineering plastics and particularly for use in injection molding and wherein improved toughness properties of the copolymers, especially their impact resistance are required. An even more specific advantage of the compositions of this invention is that they are suitable for use as engineering plastics and particularly in injection molding where the as-molded properties of the copolymer can be significantly improved and where thicker wall parts can be molded crack-free.

By way of summary, the compositions of the invention have excellent physical properties and can readily be injection molded to provide engineering plastics with excellent properties. The aromatic sulfone polymers improve the as-molded physical properties of neat or filled amide-imide-phthalamide copolymers. Thus the invention further includes compositions as defined above in the form of molded objects. Preferably the molded objects comprise about 10 to about 80 weight per cent of glass fiber, glass beads, graphite fibre, graphite powder or graphite coated with an aromatic sulfone polymer. The beneficial features of the aromatic polysulfone polymers are also observed when glass fibers, glass beads, mineral fillers, graphite fiber or graphite powder are coated with the aromatic sulfone polymers.

The polysulfone polymer coated fillers can be more readily incorporated into a molded amide-imide-phthalamide article of manufacture.

Further specific examples of filled compositions according to the invention are ones comprising (1) and about 20 to about 90 per cent by weight of the total composition of a polymer blend said blend comprising (a) about 99.9 to about 50 per cent by weight of an amide-imide phthalamide copolymer which comprises recurring polyamide-imide A' units of:

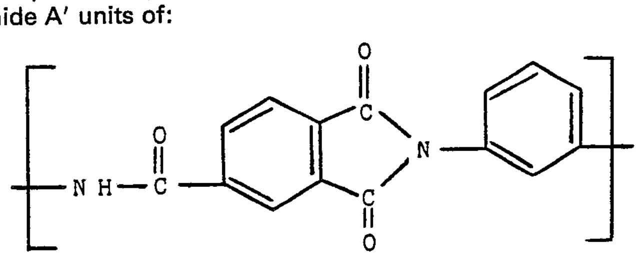

and polyamide B units of:

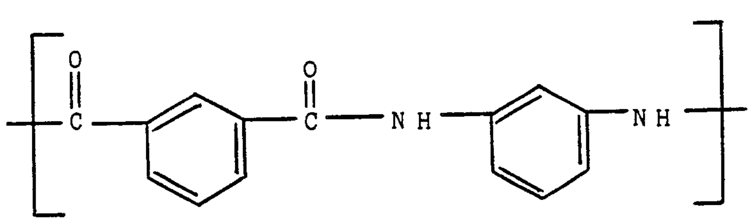

wherein the molar ratio of A' to B units is about 80 to about 20 to about 20 to about 80, and (b) about 0.1 to about 50 weight per cent of a polyethersulfone which comprises recurring units of:

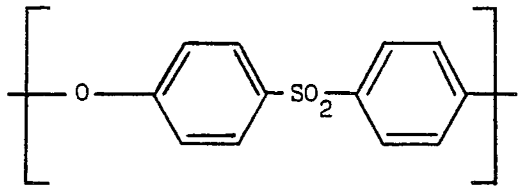

the percentages by weight of components (a) and (b) being based on the total weight of said components and (2) about 80 to about 10 per cent by weight of the total composition of a filler selected from glass fiber, glass beads, mineral fillers, graphite fiber and graphite powder.

Preferably the filler is coated with an aromatic sulfone polymer.

The invention also resides in a process for improving the impact resistance of an amide-imide phthalamide copolymer as defined above which comprises adding a polyethersulfone which comprises recurring units of:

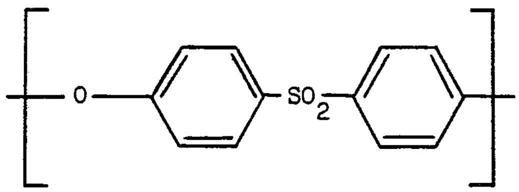

in an amount such that said polyethersulfone comprises about 0.1 to about 50 weight per cent of the final composition.

Suitable aromatic sulfone polymers used in the preparation of our novel injection moldable polyamide-imidephthalamide copolymers (U.S. Patent 4,313,868) containing polyethersulfones comprise a linear polymer containing three kinds of unit bonds consisting of an arylene bond, an ether bond and a sulfone bond. Representative examples of these aromatic polysulfone resins include those represented by the following formulae:

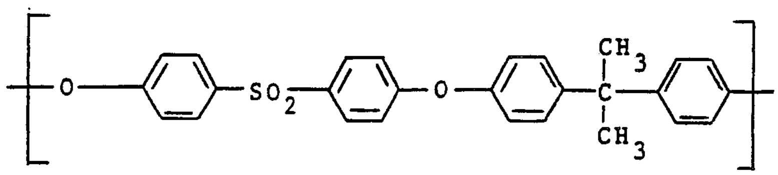

("Udel P-1700" manufactured by UCC)

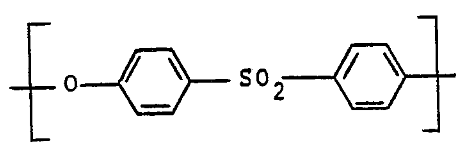

(Polyether-sulfone "Victrex" manufactured by ICI)

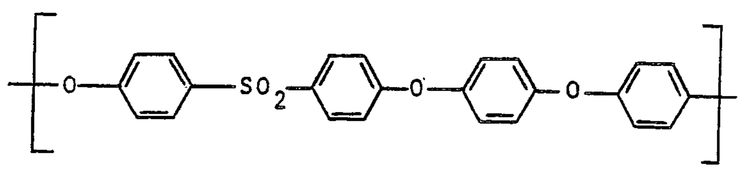

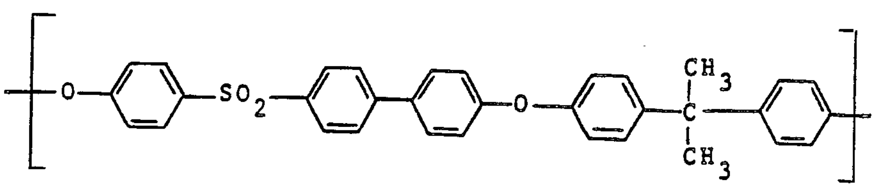

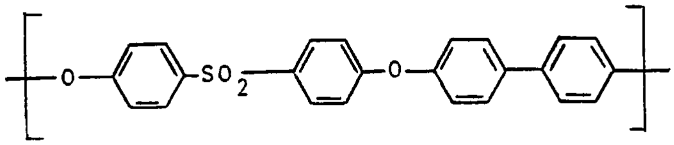

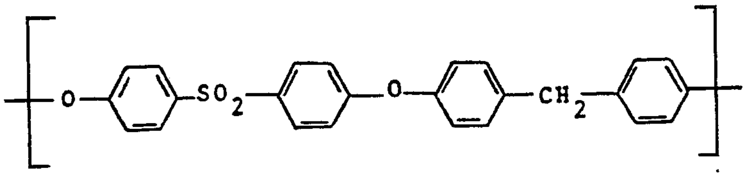

These aromatic polysulfones are easily manufactured by the methods disclosed, for example, in Japanese Patent Application Publication No. 7799/1967 and Japanese Patent Application Publication No. 617/1972. Suitably, one or more of these polysulfones are used in the same amide-imide system. Preferably, not more than two different polysulfones are used in each polyamide-imide system.

The amide-imide copolymers comprise recurring polyamide A units of:

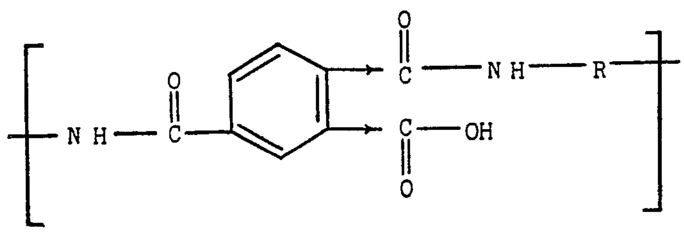

which are capable of undergoing imidization, and polyamide B units of:

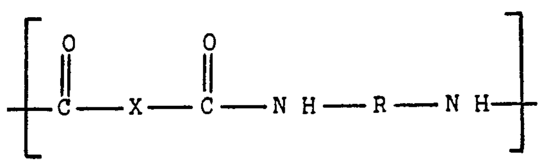

wherein the molar ratio of A units to B units is about 80 to about 20 to about 20 to about 80, preferably about 1 to 1, and wherein R is a divalent aromatic hydrocarbon radical of from about 6 to about 20 carbon atoms or two divalent hydrocarbons joined directly or by stable linkages selected from the group consisting of —O—, methylene, —CO—, $-SO_2-$, and wherein X is a divalent aromatic radical and → denotes isomerization.

In the injection molded form the polyamide A units have been converted to the polyamide-imide A' units and the copolymer comprises recurring polyamide-imide A' units of:

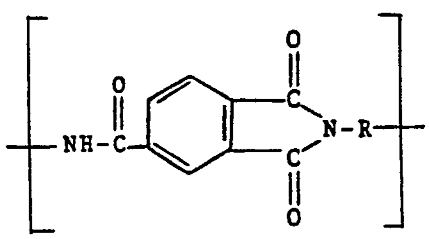

and polyamide B units of:

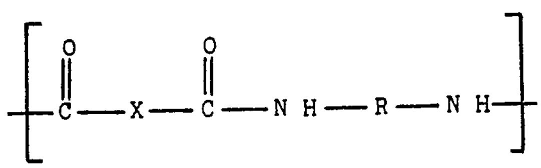

wherein the molar ratio of A' to B units is about 80 to about 20 to about 20 to about 80, preferably about 1 to about 1, and wherein R and X are defined as above.

The copolymers of this invention are prepared from diamines and acyl halide derivatives of dicarboxylic acid such as isophthalic acid or terephthalic acid and an anhydride-containing substance. Useful acyl halide derivatives of dicarboxylic acid include:

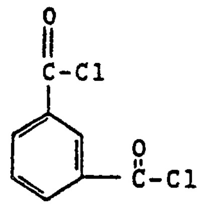 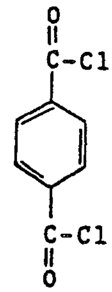

and related compounds. Suitably, the anhydride containing substance has one acyl halide group and one anhydride group in the aromatic ring. The preferred anhydride is the four acid chloride of trimellitic anhydride (4-TMAC).

Useful aromatic diamines include para- and metaphenylenediamine, oxybis (aniline), thiobis (aniline), sulfonylbis (aniline), diaminobenzophenone, methylenebis (aniline), benzidine, 1,5-diaminonaphthalene, oxybis (2-methylaniline), thiobis (2-methylaniline), and the like. Examples of other useful aromatic primary diamines ar set out in U.S. Pat. No. 3,494,890 (1970) and U.S. Pat. No. 4,016,140 (1977) both incorporated herein by reference. The preferred diamine is metaphenylenediamine.

The copolymers used to prepare the compositions of this invention can be prepared by reacting a mixture of an acyl halide derivative of an aromatic tricarboxylic acid anhydride and acyl halide derivatives of aromatic dicarboxylic acids with aromatic diamines.

Thus, for example the amide-imide copolymers may be prepared using an acyl halide derivative of an aromatic tricarboxylic acid anhydride and one or a mixture of largely- or wholly-aromatic primary diamines. The resulting products are polyamides wherein the linking groups are predominantly amide groups, although some may be imide groups, and wherein the structure contains free carboxylic acid groups which are capable of further reaction. Such polyamides are moderate molecular weight (7—13,000 as prepared) polymeric compounds, having in their molecule units of:

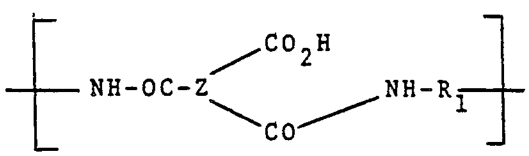 and units of:

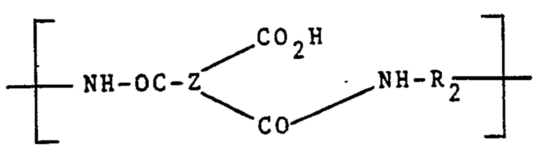 and, optionally, units of:

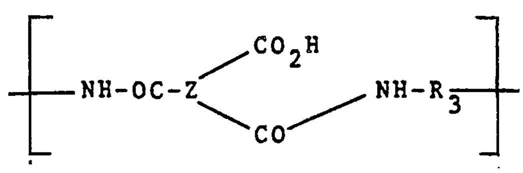

wherein the free carboxyl groups are *ortho* to one amide group, Z is an aromatic moiety containing 1 to 4 benzene rings or lower-alkyl-substituted benzene rings; $R_1$, $R_2$ and $R_3$ are the same for homopolymers and are different for copolymers and are divalent wholly- or largely-aromatic hydrocarbon radicals. These hydrocarbon radicals may be a divalent aromatic hydrocarbon radical of from about 6 to about 10 carbon atoms, or two divalent aromatic hydrocarbon radicals each of from about 6 to about 10 carbon atoms joined directly or by stable linkages such as —O—, methylene, —CO—, $—SO_2—$, —S—; for example, —R'—O—R'—, $—R'—CH_2R'—$, —R'—CO—R'—, $—R'—SO_2—R'—$ and —R'—S—R'—.

Said polyamides are capable of substantially complete imidization by heating, by which they form the polyamide-imide structure having, to a substantial extent, recurring units of:

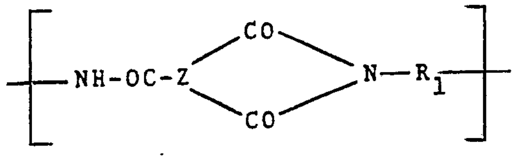 and units of:

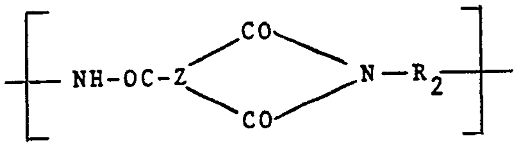 and, optionally, units of:

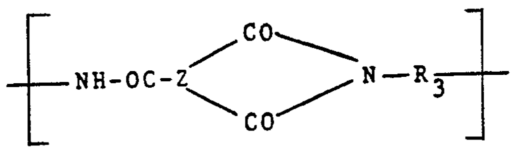

wherein one carbonyl group is *meta* to and one carbonyl group is *para* to each amide group and wherein Z, $R_1$, $R_2$ and $R_3$ are defined as above. Typical copolymers of this invention have up to about 50 percent imidization prior to heat treatment, typically about 10 to about 40 percent.

A process for improving the Dart Impact Strength and relates properties of the polyamide-imide copolymer comprising units of:

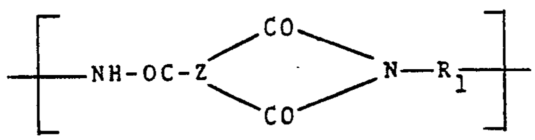

and units of:

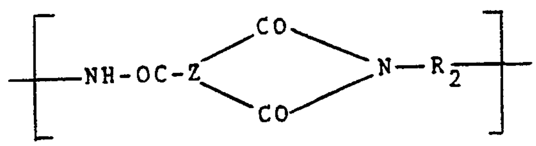

wherein one carbonyl group is *meta* to, and one carbonyl group is *para* to each amide group and wherein Z is a trivalent benzene ring or lower-alkyl-substituted trivalent benzene ring, $R_1$ and $R_2$ are different and are divalent aromatic hydrocarbon radicals of from 6 to about 10 carbon atoms or two divalent aromatic hydrocarbon radicals of from 6 to about 10 carbon atoms joined directly or by stable linkages selected from the group consisting of —O—, methylene, —CO—, —$SO_2$—, and —S— radicals and wherein said $R_1$ and $R_2$ containing units run from about 10 mole percent $R_1$ containing unit and about 90 mole percent $R_2$ containing unit to about 90 mole percent $R_1$ containing unit and about 10 mole percent $R_2$ containing unit which process comprises adding about 0.1 to about 50 percent by weight of an aromatic polysulfone.

The polyamide-imide copolymers are prepared from an anhydride-containing substance and a mixture of wholly- or partially-aromatic primary diamines or fully or partially acylated diamines. The process using acylated diamines is disclosed in U.S. Patent 4,309,528. Usefully, the anhydride-containing substance is an acyl halide derivative of the anhydride of an aromatic tricarboxylic acid which contains about 1 to about 4 benzene or lower-alkyl-substituted benzene rings and wherein two of the carboxyl groups are *ortho* to one another. More preferably, the anhydride-containing substance is an acyl halide derivative of an acid anhydride having a single benzene or lower-alkyl-substituted benzene ring, and most preferably, the substance is the acyl chloride derivative of trimellitic acid anhydride (4-TMAC).

We can use a single diamine but usefully the mixture of diamines containing two or more, preferably two or three, wholly- or largely-aromatic primary diamines. More particularly, they are wholly- or largely-aromatic primary diamines containing from about 6 to about 10 carbon atoms or wholly- or largely-aromatic primary diamines composed of two divalent aromatic moieties of from about 6 to about 10 carbon atoms, each moiety containing one primary amine group, and the moieties linked directly or through, for example, a bridging —O—, —S—, —$SO_2$—, —CO—, or methylene group. When three diamines are used they are preferably selected from the class composed of:

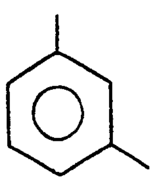 and 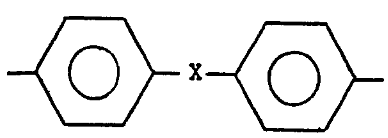

said X being an —O—, —$CH_2$—, or —$SO_2$— group. More preferably, the mixture of aromatic primary diamines is in the one-component or two-component system and is composed of *meta*-phenylenediamine and p,p'-oxybis(aniline) and *meta*-phenylenediamine, or p,p'-sulfonylbis(aniline) and p,p'-methylenebis-(aniline). Most preferably, the mixture of primary aromatic diamines contains *meta*-phenylenediamine and p,p'-oxybis(aniline). In the one-component system, the preferred diamines are oxybis(aniline) or *meta*-phenylenediamine. The aromatic nature of the diamines provides the excellent thermal properties of the homopolymer and copolymers while the primary amine groups permit the desired imide rings and amide linkages to be formed.

Usually, the polymerization or copolymerization is carried out in the presence of a nitrogen-containing organic polar solvent such as N-methylpyrrolidone, N,N-dimethylformamide and N,N-dimethylacetamide.

The amount of the aromatic sulfone polymers added to the polyamide-imide-phthalamide copolymer can be about 0.1 to about 50 weight percent, usually in the range of about 10 to about 40 weight percent.

Polyamide-imide-phthalamide copolymers build their properties during the annealing step. The as molded properties are significantly below the annealed properties. To build polyamide-imide-phthalamide properties and polyamide-imide properties, parts are annealed at temperatures up to about 530°F (277°C), but preferably at about 500°F (260°C).

Since polyamide-imides must be cured at temperatures up to and above about 500°F (260°C) it is important that the blend can withstand these cure temperatures without stress relaxation or distorting. In an amide-imide miscible alloy where a single blend glass transition temperature (Tg) is formed, only a 25°F to 50°F (14 to 25°C) drop in Tg is allowed during blending. A bigger drop in Tg could result in a product which could not be adequately cured. This Tg constraint along with the substantially lower secondary polymer Tg makes blend miscibility not always desirable, especially if high loadings of a secondary polymer are needed to improve the workability of the amdie-imide. In an ideal amide-imide alloy, the secondary polymer should have a Tg close to the amide-imide, while being significantly less viscous and similar enough in structure and/or polarity to be compatible with the amide-imide molecules.

To determine if the polyamide-imide described in patents 4,136,085 and 4,313,868 is miscible with polyethersulfone, an Omnitherm QC25 differential scanning calormeter, scanning at about 20°C/minute, was used. 80/20, 70/30, and 50/50 blends of polyamide-imide/polyethersulfone sulfone (PAI/PES) have two separate glass transition temperatures (Tg), one for the PES components (~222°C) and one for the PAI component (~260°C). A completely miscible system would exhibit a single Tg, while a partly miscible blend would have two Tg's. For a partly miscible blend, the Tg's may be broadened and shifted in temperature from those of the pure components. The polyamide-imide/polyethersulfone blends show no evidence of a system which is miscible. Immiscible blends have two Tg's, each at the temperature of one of the pure components. This was the case with the polyamide-imide/polyethersulfone blends. Although the polyamide-imide/polyethersulfone materials are not miscible, they exhibit excellent blend homogeneity where the majority of separate polymer domains are less than 0.5 micron (μm). The excellent homogeneity within an immiscible blend suggests that these materials have enough molecular attraction to be compatible since it would take an order of magnitude of mixing above that of a conventional extruder to get this level of polymer dispersion in an immiscible, incompatible blend. To determine the blend homogeneity, samples were analyzed for sulfur (PES component) using the Scanning Electron Microscope-Energy Dispersive X-ray Analyses (SEM—EDAX) at magnifications up to about 22,000X. The blends of PAI & PES do not delaminate or fibrillate, again indicating a compatible blend.

The addition of a polysulfone to a polyamide-imide produces a blend with separate pure component Tg's. However, the addition of polysulfone (Udel P1700) to an amide-imide does not result in the same level of polymer-polymer homogeneity as seen with the PAI/PES blend. The polyamide-imide/polysulfone blends (80/20 & 70/30) have large polymer-rich domains of polysulfone and polyamide-imide unlike the polyamide-imide/polyethersulfone blends. This suggests that differences do exist among various polyamide-imide/aromatic sulfone polymer blends which are not predictable by conventional thermal analysis (blend Tg). The PES used in the SEM experiments was Victrex® 600P, which has a much higher melt viscosity than the polysulfone (Udel P1700). The viscosity differences would favor mixing in the polyamide-imide/polysulfone blend.

More important, we have found that the addition of polyethersulfone affects various polyamide-imides differently, especially their physical property response, and the effect is dependent on which polyamide-imide formulation is used in the blend. When polyamide-imide phthalamide copolymer blends are prepared via U.S. 4,313,868, and alloyed with polyethersulfone, tensile strength properties of the blend are synergistic where the strength of the alloy is greater than either of the pure polymer components. This synergistic effect is ideal with the polyamide-imide-phthalamide copolymer/polyethersulfone blends and is one aspect of the novel composition disclosed herein. When polyamide-imides are prepared via U.S. 4,136,085 and alloyed with the same polyethersulfone, tensile strength properties of the blend follow an additive trend, which is predictable by the laws of mixing, where the blend properties fall between the properties of the pure polymer components.

To further illustrate the difference between the polyamide-imides alloyed with the same polyethersulfone, one can compare the homogeneity of these alloys. Similar alloy concentrations were examined with a Phillips 501 SEM at powers of up to about 12,500X. Polyamide-imide-phthalamide copolymer prepared via U.S. 4,313,868 and alloyed with 20 percent by polymer weight of Victrex 600P

(polyethersulfone) has PES phase domains ranging in size from about 1 µm to about 0.08 µm. The morphology of a 70/30 blend of the same constituents is different than that of the 80/20 blend. In the 70/30 blend, the PES phase is continously surrounding large polyamide-imide domains. Some of the polyamide-imide domains are isolated while many continue into their neighbor. The polyamide-imide phase also contains small isolated domains of PES.

Polyamide-imides prepared via U.S. 4,136,085 and alloyed with 50 percent by polymer weight of Victrex 600P (polyethersulfone) have two distinct phases. The PES phase is a continuous matrix surrounding the PAI phase. In general, the polyamide-imide domains range in size from about ¼ µm to more than 1 µm. Distinct domains of PAI and PES are not as apparent in the 80/20 or 70/30 blends. As the concentration of PES in the blend increases, so does the density of sulfur as determined on the SEM to obtain EDAX from which the electron dot map (EDM) is obtained. In the case of the 80/20 and 70/30 blends, some areas of the EDM are devoid of sulfur. This suggests areas of pure polyamide-imide domains. The remaining area on the EDM is covered fairly uniformly with evidence of sulfur. This entire area could not be pure PES since it covers much more than about 20% or about 30% of the surface. The balance of the area then contains both polyamide-imide and polyethersulfone. The texture hints that small domains of polyamide-imide may exist in a thin cluster of more ductile PES. This further suggests that the domains are smaller than ⅓ µm.

The level and degree of homogeneity within these blends may possibly explain the difference in the property response between the two different polyamide-imide based polyethersulfone blends. It is evident that polyamide-imides prepared from different monomers act differently when alloyed with the same polyethersulfone.

Table 1 illustrates the importance of curing polyamide-imides. These polymer alloys have little, if any, commercial use if they are not cured.

TABLE 1

| | As Molded | Annealed at 500°F (260°C) |
|---|---|---|
| % Glass loading | 40 | 40 |
| Injection molding temps. | 650°F (343°C) | 650°F (343°C) |
| *Physical Properties* | | |
| Tensile strength (psi) MPa) | 10,800 (74.5) | 32,400 (223.4) |
| Tensile elongation (%) | 2.0 | 5.1 |
| Flexural modulus (psi) MPa) | 2,008,000 (13843.2) | 2,000,000 (13788.0) |
| HDT°F (°C) | 484 (251) | 550 (288) |
| Izod impact *ft.-lbs.* in. of notch (J/m) | 1.0 (53.3) | 1.6 (85.3) |

After cure, a representative 20 percent polyethersulfone or polyarylsulfone or polysulfone neat polyamide-imide-phthalamide copolymer sample had total shrinkage of 10 mils per inch (10 mm/m), while the polyamide-imide control had a shrinkage of 8 mils per inch (8 mm/m).

Polyamide-imide-phthalamide copolymer/aromatic sulfone polymer blends coated on sized fillers such as glass fibers give better molding characteristics and improved as-molded properties. Thus, polyamide-imide-phthalamide copolymer/aromatic sulfone polymer blends, containing about 20 to about 60 percent filler and having improved physical properties, can be marketed.

Cavity pressure measurements are used as quality control checks of polyamide-imide-phthalamide aromatic sulfone polymer resin viscosity. Pressure buildup during the filling of an injection molded part is measured at a point in the cavity (ejector pin). This is accomplished by placing a pressure transducer behind the ejector pin and recording the pressure with a chart recorder or other readout device. Cavity pressure normally rises as the mold is being filled and peaks as the molten resin is packed into the cavity. As the resin solidifies, cavity pressure decreases.

We have found that resins which have low cavity pressure process poorly and that spiral flow measurements were not sensitive enough to discriminate between resins in the viscosity range of interest. Low cavity pressures indicate a large pressure drop between injection and cavity pressures. This indicates higher resin viscosities. In the same manner, high cavity pressures indicate less pressure change between injection and cavity presures, suggesting lower resin viscosities.

Polyamide-imide-phthalamide and polyamide-imide copolymer viscosities have been measured by spiral flow determinations previous to the implementation of the cavity pressure procedure, see U.S. Pat. No. 4,224,214. Cavity pressure was selected over spiral flow because of its greater sensitivity. The cavity

pressure test has been implemented as a polyamide-imide-phthalamide copolymer/aromatic sulfone polymer blend quality control procedure. Like spiral flow, cavity pressure is a test that can be done conveniently in a molder's shop.

The injection molding machine was equipped with a horizontally mounted thermoset screw and barrel assembly. The mold was heated with hot oil from a Mokon Model 105—057 heating unit. Cavity pressure was recorded with a Control Process Model 241 recorder. The mold was equipped to handle pressure transducers at the ejector pins located at the gate end of the tensile bar and the gate end of the flex bar before we begin our work. Since it is desirable to make cavity pressure measurements at the dead end of the flex bar, it was necessary to make some modifications in the mold base to accommodate a transducer at this pin position.

Resins were dried in a desiccant hot air circulating oven at about 300°F (149°C) to about 400°F (204°C) for at least 16 hours before testing. Moisture in polyamide-imide-phthalamide copolymer/aromatic sulfone polymer blends has a very significant effect on their flow properties. Therefore, special care was taken to be sure that the samples were properly dried. This drying procedure was used before making flow rate and cavity pressure measurements.

The flow rate procedure was patterned after the standard method described in ASTM D1238. A 335°C (635°F) barrel temperature with a 30 minute preheat time was used. This is about the largest set of weights that can be used safely with the standard extrusion plastometer apparatus. A standard 0.0825 in. (2 mm) diameter, 0.315 in. (8 mm) long orifice was used.

Special care was taken to be sure that each flow rate measurement was started when an equivalent volume of resin was in the barrel. Previous rheology work indicated that there is a very large "barrel height" effect on polyamide-imide-phthalamide copolymers. Each flow rate measurement was initiated while the top of the piston collar was between the two scribe marks on the piston. This precaution is also required by ASTM in method D1238.

The reinforced polyamide-imide-phthalamide copolymer/aromatic sulfone polymer blends may be prepared in various ways. For example, so-called roving endless glass fiber strands are coated with the aromatic sulfone polymer and then are further coated with the polyamic acid melt and subsequently chopped. The chopped fibers or the glass beads coated with the aromatic sulfone polymer may also be mixed with granulated polyamic acid and the resulting mixture melted in a conventional extruder, or alternatively, the fibers coated with the aromatic sulfone polymer may be directly introduced into the polyamic acid melt through a suitable inlet in the extruder. Injection molding of the unfilled or glass-filled polyamide-imide-phthalamide aromatic sulfone polymer blends can be accomplished by injecting the blend into a mold maintained at a temperature of about 350°C (177°C) to about 450°F (232°C). In this process, a 15 to 30 second cycle is used with a barrel temperature of about 580°F to about 670°F (354°C). The injection molding conditions are given in Table 2.

TABLE 2

| | Set Points |
|---|---|
| Cylinder temperatures (°F) (°C) | |
| Nozzle | 630—650°F (332—343°C) |
| Front zone | 630—650°F (332—343°C) |
| Rear zone | 620—640°F (327—338°C) |
| Timer (seconds) | |
| Clamp closed (cure) | 18 |
| Injection hold | 6 |
| Booster (inj. hi) | 2 |
| Cycle delay (open) | 1 |
| High-Low | 2 |
| Injection pressure (psi) MPa) | |
| High | 20,000 (137.9) |
| Low | 10,000 (69.0) |
| Machine settings | |
| Clamp pressure (tons) | Max |
| Injection rate | Max |
| Screw RPM | 50 |
| Feed setting | as Req'd. |
| Cushion | $\frac{1}{4}$" |
| Back pressure (psi) (MPa) | 220 (1.5) |
| Mold temperature (°F) (°C) | |
| Stationary | 450 (232) |
| Movable | 450 (232) |
| Hopper drier | 220 (104) |

The mechanical properties of the unfilled polyamide-imide-phthalamide copolymers, prepared as in Example II, containing various aromatic sulfone polymers (melt compounded) and also the polyamide-imide, prepared as in Example I, containing aromatic sulfone polymer blends are given in Table 3. The data in the table shows that these copolymers have excellent cured mechanical and thermal properties despite the fact that they contain about 10 to about 50 weight percent of an aromatic sulfone polymer.

TABLE 3

| | | | | |
|---|---|---|---|---|
| % Polyamide-imide | | | | |
| Example I Prepared | 100 | 80 | 70 | 50 |
| Example II Prepared | — | — | — | — |
| % Polyethersulfone | | | | |
| Victrex 600P | 0 | 20 | 30 | 50 |
| Victrex 200P | — | — | — | — |
| % Polysulfone (Udel P1700) | — | — | — | — |
| % Polyarylsulfone (Radel A—400) | — | — | — | — |
| Cavity Pressure PSI (MPa) | 12,600 (86.9) | 16,000 (110.3) | 16,000 (110.3) | 17,700 (122.0) |
| Total Shrinkage mils/in. (mm/m) | 8.0 | 9.3 | 10.1 | 15.7 |
| Physical Properties | | | | |
| Tensile Strength X$10^3$ PSI (MPa) | 27.1 (187) | 22.8 (157) | 20.0 (138) | 16.5 (114) |
| Tensile Elongation % | 14.1 | 22.8 | 21.6 | 9.4 |
| Flexural Strength X$10^3$ PSI (MPa) | 29.3 (202) | 26.6 (183) | 27.8 (192) | 24.4 (168) |
| Flexural Modulus X$10^6$ PSI (MPa) | .69 (4757) | .61 (4205) | .60 (4136) | .50 (3447) |
| Izod Impact, Notched Ft-lbs/in (J/m) | 2.5 (133) | 3.2 (171) | — | 1.0 (53) |
| Dart Impact in-lbs (J) | 20.4 (2.24) | 126.7 (13.94) | 101.8 (11.20) | — |
| Thermal Properties | | | | |
| HDT, °F (°C) | 529 (276) | 528 (276) | 522 (272) | 438 (226) |
| Flexural Strength X$10^3$ PSI (MPa) | | | | |
| @ 275°F (135°C) | 26.2 (181) | 23.4 (161) | — | — |
| @ 400°F (204°C) | 20.1 (139) | 17.4 (120) | 15.0 (103) | — |
| @ 500°F (260°C) | 11.7 (81) | 6.6 (46) | — | — |
| Thermal Aging Properties | | | | |
| Tensile Strength X$10^3$ PSI (MPa) | | | | |
| After 500 hrs @ 500°F (260°C) | 28.2 (194) | 22.4 (154) | — | — |
| After 1000 hrs @ 500°F (260°C) | 28.0 (193) | 22.5 (155) | — | — |
| HDT, °F (°C) | | | | |
| After 500 hrs @ 500°F (260°C) | 554 (290) | 541 (283) | — | — |
| After 1000 hrs @ 500°F (260°C) | 557 (292) | 542 (283) | — | — |

TABLE 3 (continued)

| | | | | |
|---|---|---|---|---|
| Flexural Modulus X10$^6$ PSI (MPa) | | | | |
| After 500 hrs @ 500°F (260°C) | .79 (5446) | .70 (4826) | — | — |
| After 1000 hrs @ 500°F (260°C) | .77 (5308) | .73 (5033) | — | — |
| % Polyamide-imide | | | | |
| Example I Prepared | 30 | 0 | 100 | 80 |
| Example II Prepared | — | — | — | — |
| % Polyethersulfone | | | | |
| Victrex 600P | 70 | 100 | — | — |
| Victrex 200P | — | — | 0 | 20 |
| % Polysulfone (Udel P1700) | — | — | — | — |
| % Polyarylsulfone (Radel A—400) | — | — | — | — |
| Cavity Pressure PSI (MPa) | 17,000 (117) | 19,600 (135) | 12,700 (87.6) | 16,400 (113) |
| Total Shrinkage mils/in. (mm/m) | * | 8.0** | 8.0 | 8.0 |
| Physical Properties | | | | |
| Tensile Strength X10$^3$ PSI (MPa) | — | 14.3 (99) | 27.9 (192) | 21.7 (150) |
| Tensile Elongation % | — | 27.9 | 14.1 | 10.2 |
| Flexural Strength X10$^3$ PSI (MPa) | — | 23.0 (159) | 34.3 (236) | 29.2 (201) |
| Flexural Modulus X10$^6$ PSI (MPa) | — | .43 (2964) | .74 (5102) | .620 (4274) |
| Izod Impact, Notched | — | 1.5 (80) | 2.54 (135) | 1.80 (96) |
| Ft-lbs/in (J/m) | | | | |
| Dart Impact in-lbs (J) | — | — | — | — |
| Thermal Properties | | | | |
| HDT, °F (°C) | — | 422 (217) | 528 (276) | 525 (274) |
| Flexural Strength X10$^3$ PSI (MPa) | | | | |
| @ 275°F (135°C) | — | 17.1 (118) | — | — |
| @ 400°F (204°C) | — | 10.3 (71) | 19.8 (136) | 16.2 (112) |
| @ 500°F (260°C) 0 @ | — | 450°F (232°C) | — | — |
| Thermal Aging Properties | | | | |
| Tensile Strength X10$^3$ PSI (MPa) | | | | |
| After 500 hrs @ 500°F (260°C) | — | — | — | — |
| After 1000 hrs @ 500°F (260°C) | — | — | — | — |

TABLE 3 (continued)

| | | | | |
|---|---|---|---|---|
| HDT, °F (°C) | | | | |
| After 500 hrs @ 500°F (260°C) | — | — | — | — |
| After 1000 hrs @ 500°F (260°C) | — | — | — | — |
| Flexural Modulus X$10^6$ PSI (MPa) | | | | |
| After 500 hrs @ 500°F (260°C) | — | — | — | — |
| After 1000 hrs @ 500°F (260°C) | — | — | — | — |
| % Polyamide-imide | | | | |
| Example I Prepared | 0 | 80 | 70 | 0 |
| Example II Prepared | — | — | — | — |
| % Polyethersulfone | | | | |
| Victrex 600P | — | — | — | — |
| Victrex 200P | 100 | — | — | — |
| % Polysulfone (Udel P1700) | — | 20 | 30 | 100 |
| % Polyarylsulfone (Radel A—400) | — | — | — | — |
| Cavity Pressure PSI (MPa) | 20,000 (138) | 19,700 (136) | 20,000 (138) | 20,000 (138) |
| Total Shrinkage mils/in. (mm/m) | — | 7.4 | 7.7 | — |
| Physical Properties | | | | |
| Tensile Strength X$10^3$ PSI (MPa) | 13.7 (94) | 19.8 (137) | 17.7 (122) | 9.9 (68) |
| Tensile Elongation % | 47.9 | 12.1 | 10.3 | 84.2 |
| Flexural Strength X$10^3$ PSI (MPa) | 22.7 (156) | 28.3 (195) | 26.3 (181) | 17.3 (119) |
| Flexural Modulus X$10^6$ PSI (MPa) | .425 (2930) | .591 (4074) | .561 (3867) | .395 (2723) |
| Izod Impact, Notched Ft-lbs/in (J/m) | 1.1 (58.6) | 1.0 (53.3) | 1.62 (86.3) | 1.82 (97.0) |
| Dart Impact in-lbs (J) | — | — | — | — |
| Thermal Properties | | | | |
| HDT, °F (°C) | 432 (222) | 533 (278) | 520 (271) | 326 (163) |
| Flexural Strength X$10^3$ PSI (MPa) | | | | |
| @ 275°F (135°C) | — | — | — | — |
| @ 400°F (204°C) | 7.0 (48) | 9.7 (67) | 6.2 (43) | 0 |
| @ 500°F (260°C) | — | — | — | — |

TABLE 3 (continued)

| | | | | |
|---|---|---|---|---|
| Thermal Aging Properties | | | | |
| Tensile Strength X10³ PSI (MPa) | | | | |
| After 500 hrs @ 500°F (260°C) | — | — | — | — |
| After 1000 hrs @ 500°F (260°C) | — | — | — | — |
| HDT, °F (°C) | | | | |
| After 500 hrs @ 500°F (260°C) | — | — | — | — |
| After 1000 hrs @ 500°F (260°C) | — | — | — | — |
| Flexural Modulus X10⁶ PSI (MPa) | | | | |
| After 500 hrs @ 500°F (260°C) | — | — | — | — |
| After 1000 hrs @ 500°F (260°C) | — | — | — | — |
| % Polyamide-imide | | | | |
| Example I Prepared | — | — | — | — |
| Example II Prepared | 100 | 80 | 70 | 0 |
| % Polyethersulfone | | | | |
| Victrex 600P | — | 20 | 30 | 100 |
| Victrex 200P | — | — | — | — |
| % Polysulfone (Udel P1700) | — | — | — | — |
| % Polyarylsulfone (Radel A—400) | — | — | — | — |
| Cavity Pressure PSI (MPa) | 13,700 (94.4) | 14,800 (102.0) | 16,100 (111.0) | 19,600 (135.1) |
| Total Shrinkage mils/in. (mm/m) | 7.7 | 8.4 | 8.4 | — |
| Physical Properties | | | | |
| Tensile Strength X10³ PSI (MPa) | 16.8 (116) | 24.6 (170) | 20.9 (144) | 14.3 (99) |
| Tensile Elongation % | 5.8 | 10.9 | 9.4 | 27.9 |
| Flexural Strength X10³ PSI (MPa) | 33.7 (232) | 33.3 (230) | 30.8 (212) | 23.0 (159) |
| Flexural Modulus X10⁶ PSI (MPa) | 0.84 (5791) | 0.64 (4412) | 0.58 (3998) | 0.43 (2964) |
| Izod Impact, Notched Ft-lbs/in (J/m) | 0.3 (16) | 1.20 (64) | 1.0 (53) | 1.5 (80) |
| Dart Impact in-lbs (J) | <2.0 (<0.22) | 21.4 (2.35) | — | — |
| Thermal Properties | | | | |
| HDT, °F (°C) | 552 (289) | 557 (292) | 522 (272) | 422 (217) |

TABLE 3 (continued)

| | | | | |
|---|---|---|---|---|
| Flexural Strength X10³ PSI (MPa) | | | | |
| @ 275°F (135°C) | 26.9 (185) | 28.4 (196) | 22.9 (158) | 17.1 (118) |
| @ 400°F (204°C) | 24.8 (171) | 22.3 (154) | 18.4 (127) | 10.3 (71) |
| @ 500°F (260°C) | 15.6 (107) | 8.1 (56) | 2.7 (19) 0 | @ 450°F (232°C) |
| Thermal Aging Properties | | | | |
| Tensile Strength X10³ PSI (MPa) | | | | |
| After 500 hrs @ 500°F (260°C) | — | 23.9 (165) | 20.8 (143) | — |
| After 1000 hrs @ 500°F (260°C) | — | 22.0 (152) | 19.1 (132) | — |
| HDT, °F (°C) | | | | |
| After 500 hrs @ 500°F (260°C) | — | 573 (301) | 554 (290) | — |
| After 1000 hrs @ 500°F (260°C) | — | 576 (302) | 564 (296) | — |
| Flexural Modulus X10⁶ PSI (MPa) | | | | |
| After 500 hrs @ 500°F (260°C) | — | .61 (4205) | .55 (3792) | — |
| After 1000 hrs @ 500°F (260°C) | — | .58 (3999) | .54 (3723) | — |
| % Polyamide-imide | | | | |
| Example I Prepared | — | — | | |
| Example II Prepared | 90 | 80 | | |
| % Polyethersulfone | | | | |
| Victrex 600P | — | — | | |
| Victrex 200P | — | — | | |
| % Polysulfone (Udel P1700) | — | — | | |
| % Polyarylsulfone (Radel A—400) | 10 | 20 | | |
| Cavity Pressure PSI (MPa) | 19,100 (132) | 20,300 (140) | | |
| Total Shrinkage mils/in. (mm/m) | 10.0 | 10.4 | | |
| Physical Properties | | | | |
| Tensile Strength X10³ PSI (MPa) | 19.4 (134) | 21.6 (149) | | |
| Tensile Elongation % | 7.5 | 10.4 | | |
| Flexural Strength X10³ PSI (MPa) | 34.4 (237) | 33.2 (289) | | |
| Flexural Modulus X10⁶ PSI (MPa) | 0.65 (4481) | 0.61 (4205) | | |
| Izod Impact, Notched | 0.9 (48) | 1.4 (75) | | |

TABLE 3 (continued)

| | | |
|---|---|---|
| Ft-lbs/in (J/m) | | |
| Dart Impact in-lbs (J) | — | — |
| Thermal Properties | | |
| HDT, °F (°C) | 560 (293) | 560 (293) |
| Flexural Strength X10$^3$ PSI (MPa) | | |
| @ 275°F (135°C) | — | — |
| @ 400°F (204°C) | — | — |
| @ 500°F (260°C) | — | — |
| Thermal Aging Properties | | |
| Tensile Strengh X10$^3$ PSI (MPa) | | |
| After 500 hrs @ 500°F (260°C) | — | — |
| After 1000 hrs @ 500°F (260°C) | — | — |
| HDT, °F (°C) | | |
| After 500 hrs @ 500°F (260°C) | — | — |
| After 1000 hrs @ 500°F (260°C) | — | — |
| Flexural Modulus X10$^6$ PSI (MPa) | | |
| After 500 hrs @ 500°F (260°C) | — | — |
| After 1000 hrs @ 500°F (260°C) | — | — |

*Distorted during curing @ 500°F, (260°C)
**Parts annealed @ 400°F (204°C) for 4 hrs.

Note: All samples with PAI as prepared in Example II have been cured at temperatures up to 515°F (268°C).
All samples with PAI as prepared in Example I were cured @ 500°F (260°C).

The mechanical properties of the filled polyamideimide-phthalamide copolymers, prepared as in example II, containing an aromatic sulfone polymer and also the polyamide-imide, prepared as in example I, containing an aromatic sulfone polymer are given in Table 4 and it shows that these copolymers have excellent cured mechanical and thermal properties despite the fact that they contain about 10 to about 50 polymer weight percent of an aromatic sulfone polymer. It is important to note that the polyamide-imide-phthalamide copolymer/polyethersulfone blends (prepared as in example II) had less flow than the polyamide-imide-phthalamide copolymer as measured by cavity pressure. This decrease in flow at injection molding shear rates is not seen with the polyamide-imides (prepared as in example I) polyether-sulfone blend where with thise blends only a slight increase in flow was noted. This further suggests that there are differences among polyamide-imide/polyethersulfone blends, and these differences are dependent on the polyamide-imide used in the alloy. The flow reduction with the polyamide-imide-phthalamide copolymer/polyethersulfone blend is in direct contrast to that reported in U.S. Patent 4,340,697 where it was found that a polyamide-imide/polyethersulfone blend had significantly better flow properties than PAI.

To further illustrate the difference between polyamide-imides prepared in example I and example II, one need only compare their flow characteristics. The viscosity of polyamide-imides prepared in example II is much more temperature sensitive but less shear rate sensitive than the polyamide-imide prepared in example I.

The shear sensitivity of these polymers can be illustrated by plotting apparent viscosity vs shear rate. Both the polyamide-imides are power law fluids where their viscosity and shear rate can be related through two experimental constants; the power law index (N) and the consistency index (K). The power law index can be calculated from the slope of the viscosity vs shear rate line where a steeper slope (greater value) means the polymer viscosity is more shear rate dependent. The polyamide-imide prepared in Example I has a viscosity vs shear rate slope of −0.75 while polyamide-imide prepared in Example II has a slope of −0.45.

The viscosity vs temperature response of these materials can be quantified by calculating an activation energy via an Arrhenius plot. The activation energy of the viscosity vs. temperature response for polyamide-imide phthalamide is approximately six times greater than for polyamide-imide copolymers. The greater activation energy of the polyamide-imide phthalamide indicates that this PAI melt viscosity is much more temperature sensitive than a PAI discussed in U.S. patent 4,136,085. Under conventional PAI processing temperature, 650 (343) to 690°F (366°C) the PAI phthalamide copolymers have better flow properties than the PAI copolymers discussed in U.S. patent 4,136,085 and it is for these flow advantages that the PAI phthalamide copolymer does not need to be alloyed to improve its flow properties at injection molding shear rates.

TABLE 4

| | | | | |
|---|---|---|---|---|
| % Polyamide-imide | | | | |
| Example I Prepared | — | — | — | — |
| Example II Prepared | 60 | 54 | 48 | 0 |
| % Polyethersulfone | | | | |
| Victrex | 0 | 6 | 12 | 70 |
| % Glass Fibers | 40 | 40 | 40 | 30 |
| % Graphite Fibers AS—1810 | — | — | — | — |
| Cavity Pressure X$10^3$ PSI (MPa) | | | | |
| @ 18 sec | 17.1 (118) | 10.6 (73) | 13.5** (93) | 19.0 (131) |
| @ 90 sec | 19.0 (131) | 11.2 (77) | 13.8 (95) | 19.0 (131) |
| Total Shrinkage mils/in. (mm/m) (after curing @ 500°F (260°C)) | 1.0 | 1.0 | 1.0 | distorted |
| Physical Properties | | | | |
| Tensile Strength X$10^3$ PSI (MPa) | 29.0 (200) | 32.0 (221) | 29.6 (204) | 20.3 (140) |
| Tensile Elongation % | 6.0 | 6.6 | 6.1 | 3.0 |
| Flexural Strength X$10^3$ PSI (MPa) | 53.0 (365) | 53.2 (367) | 47.8 (329) | — |
| Flexural Modulus X$10^6$ PSI (MPa) | 1.99 (13719) | 1.92 (13236) | 1.86 (12823) | 1.22 (8411) |
| Izod Impact, Notched Ft-lbs/in (J/m) | 1.51 (80.5) | 1.64 (87.4) | 1.54 (82.1) | 1.5 (80.0) |
| Thermal Properties | | | | |
| HDT, °F (°C) | 550 (288) | 555 (291) | 555 (291) | 421 (216) |
| Flexural Strength X$10^3$ PSI (MPa) | | | | |
| @ 275°F (135°C) | 40.9 (282) | 43.5 (300) | 34.5 (238) | 22.1 (152) |
| @ 400°F (204°C) | 36.1 (249) | 37.8 (261) | 30.6 (211) | 14.6 (101) |
| @ 450°F (232°C) | — | — | — | 0 |
| @ 500°F (260°C) | 26.9 (185) | 26.7 (184) | 16.4 (113) | — |
| Thermal Aging Properties | | | | |
| Tensile Strength X$10^3$ PSI (MPa) | | | | |
| After 500 hrs @ 500°F (260°C) | 30.0 (207) | — | 29.1 (201) | — |
| After 1000 hrs @ 500°F (260°C) | 26.5 (183) | — | 25.8 (178) | — |

TABLE 4 (continued)

| | | | | |
|---|---|---|---|---|
| HDT, °F (°C) | | | | |
| After 500 hrs @ 500°F (260°C) | 562 (294) | — | 555 (291) | — |
| After 1000 hrs @ 500°F (260°C) | 557 (292) | — | 556 (291) | — |
| Flexural Modulus X10⁶ PSI (MPa) | | | | |
| After 500 hrs @ 500°F (260°C) | 2.04 (14064) | — | 1.89 (13030) | — |
| After 1000 hrs @ 500°F (260°C) | 1.92 (13237) | — | 1.73 (11927) | — |
| % Polyamide-imide | | | | |
| Example I Prepared | — | 70 | 65 | 56 |
| Example II Prepared | 56 | — | — | — |
| % Polyethersulfone | | | | |
| Victrex | 14 | — | 12 | 14 |
| % Glass Fibers | — | 30 | 23 | 30 |
| % Graphite Fibers AS—1810 | 30 | — | — | — |
| Cavity Pressure X10³ PSI (MPa) | | | | |
| @ 18 sec | 6.5 (45) | 12.3 (85) | 13.4 (92) | 16.0 (110) |
| @ 90 sec | — | 9.3 (64) | — | 15.0 (103) |
| Total Shrinkage mils/in. (mm/m) (after curing @ 500°F (260°C)) | 0.5 | 1.0 | — | 1.3 |
| Physical Properties | | | | |
| Tensile Strength X10³ PSI (MPa) | 28.8 (199) | 26.7 | 23.6 | 23.5 |
| Tensile Elongation % | 6.5 | 6.9 | 7.1 | 4.9 |
| Flexural Strength X10³ PSI (MPa) | 45.4 (131) | 46.4 (320) | 34.2 (236) | 39.0 (269) |
| Flexural Modulus X10⁶ PSI (MPa) | 2.65 (18269) | 1.57 (10824) | 1.25 (8617) | 1.43 (9858) |
| Izod Impact, Notched Ft-lbs/in (J/m) | 1.1 (59) | 1.6 (85) | 1.0 (53) | 1.0 (53) |
| Thermal Properties | | | | |
| HDT, °F (°C) | 549 (287) | 543 (284) | 527 (275) | 527 (275) |
| Flexural Strength X10³ PSI (MPa) | | | | |
| @ 275°F (135°C) | — | 32.5 (224) | — | 27.9 (192) |
| @ 400°F (204°C) | — | 26.6 (183) | — | 20.3 (140) |
| @ 450°F (232°C) | — | — | — | — |
| @ 500°F (260°C) | — | 15.6 (107) | — | 6.7 (46) |

TABLE 4 (continued)

| | | | | |
|---|---|---|---|---|
| Thermal Aging Properties | | | | |
| Tensile Strength X10³ PSI (MPa) | | | | |
| After 500 hrs @ 500°F (260°C) | — | 27.2 (187) | — | 23.7 (163) |
| After 1000 hrs @ 500°F (260°C) | — | 26.7 (184) | — | 22.2 (153) |
| HDT, °F (°C) | | | | |
| After 500 hrs @ 500°F (260°C) | — | 554 (290) | — | 556 (291) |
| After 1000 hrs @ 500°F (260°C) | — | 556 (291) | — | 554 (290) |
| Flexural Modulus X10⁶ PSI (MPa) | | | | |
| After 500 hrs @ 500°F (260°C) | — | 1.72 (11858) | — | 1.47 (10134) |
| After 1000 hrs @ 500°F (260°C) | — | 1.56 (10755) | — | 1.39 (9583) |
| % Polyamide-imide | | | | |
| Example I Prepared | 49 | 35 | 0 | 61 |
| Example II Prepared | — | — | — | — |
| % Polyethersulfone | | | | |
| Victrex | 21 | 35 | 70 | 15 |
| % Glass Fibers | 30 | 30 | 30 | — |
| % Graphite Fibers AS—1810 | — | — | — | 24 |
| Cavity Pressure X10³ PSI (MPa) | | | | |
| @ 18 sec | 13.0 (90) | 13.2 (91) | 17.5 (121) | 6.4 (44) |
| @ 90 sec | — | — | 17.5 (121) | — |
| Total Shrinkage mils/in. (mm/m) (after curing @ 500°F (260°C)) | 3.3 | * | distorted | .5 |
| Physical Properties | | | | |
| Tensile Strength X10³ PSI (MPa) | 22.5 (155) | 20.7 (143) | 20.3 (140) | 29.0 (200) |
| Tensile Elongation % | 4.2 | 5.2 | 3.0 | — |
| Flexural Strength X10³ PSI (MPa) | 36.4 (251) | 32.7 (225) | — | 45.4 (313) |
| Flexural Modulus X10⁶ PSI (MPa) | 1.53 (10548) | 1.45 (9996) | 1.22 (8411) | 2.49 (17166) |
| Izod Impact, Notched Ft-lbs/in (J/m) | 1.0 (53) | 1.0 (53) | 1.5 (80) | 0.9 (48) |
| Thermal Properties | | | | |
| HDT, °F (°C) | 532 (278) | 4.62 (239) | 421 (216) | 583 (306) |

TABLE 4 (continued)

| | | | | |
|---|---|---|---|---|
| Flexural Strength X$10^3$ PSI (MPa) | | | | |
| @ 275°F (135°C) | — | — | 22.0 (152) | — |
| @ 400°F (204°C) | — | — | 14.6 (101) | — |
| @ 450°F (232°C) | — | — | 0 | — |
| @ 500°F (260°C) | — | — | 0 | — |
| Thermal Aging Properties | | | | |
| Tensile Strengh X$10^3$ PSI (MPa) | | | | |
| After 500 hrs @ 500°F (260°C) | — | — | — | — |
| After 1000 hrs @ 500°F (260°C) | — | — | — | — |
| HDT, °F (°C) | | | | |
| After 500 hrs @ 500°F (260°C) | — | — | — | — |
| After 1000 hrs @ 500°F (260°C) | — | — | — | — |
| Flexural Modulus X$10^6$ PSI (MPa) | | | | |
| After 500 hrs @ 500°F (260°C) | — | — | — | — |
| After 1000 hrs @ 500°F (260°C) | — | — | — | — |
| % Polyamide-imide | | | | |
| Example I Prepared | 70 | 55 | | |
| Example II Prepared | — | — | | |
| % Polyethersulfone | | | | |
| Victrex | — | 15 | | |
| % Glass Fibers | — | — | | |
| % Graphite Fibers AS—1810 | 30 | 30 | | |
| Cavity Pressure X$10^3$ PSI (MPa) | | | | |
| @ 18 sec | 0 | 9.3 (64) | | |
| @ 90 sec | — | — | | |
| Total Shrinkage mils/in. (mm/m) (after curing @ 500°F (260°C)) | .5 | .5 | | |
| Physical Properties | | | | |
| Tensile Strength X$10^3$ PSI (MPa) | 27.9 (192) | 31.0 (214) | | |
| Tensile Elongation % | 4.3 | 7.6 | | |
| Flexural Strength X$10^3$ PSI (MPa) | 46.2 (319) | 48.8 (336) | | |

TABLE 4 (continued)

| | | |
|---|---|---|
| Flexural Modulus X10$^6$ PSI (MPa) | 2.62 (18062) | 2.50 (17235) |
| Izod Impact, Notched Ft-lbs/in (J/m) | 0.9 (48) | 1.4 (75) |
| Thermal Properties | | |
| HDT, °F (°C) | 544 (284) | 536 (280) |
| Flexural Strength X10$^3$ PSI (MPa) | | |
| @ 275°F (135°C) | — | — |
| @ 400°F (204°C) | — | — |
| @ 450°F (232°C) | — | — |
| @ 500°F (260°C) | — | — |
| Thermal Aging Properties | | |
| Tensile Strengh X10$^3$ PSI (MPa) | | |
| After 500 hrs @ 500°F (260°C) | — | — |
| After 1000 hrs @ 500°F (260°C) | — | — |
| HDT, °F (°C) | | |
| After 500 hrs @ 500°F (260°C) | — | — |
| After 1000 hrs @ 500°F (260°C) | — | — |
| Flexural Modulus X10$^6$ PSI (MPa) | | |
| After 500 hrs @ 500°F (260°C) | — | — |
| After 1000 hrs @ 500°F (260°C) | — | — |

All PAI samles cured @ 500°F (260°C). Each sample also contains 1% PTFE based on total weight.
Note: *Sample had slight distortion.
**Molded @ 670°F (354°C).
Alloys prepared with PAI as prepared in Example I were molded @ 630°F (332°C).
Alloys prepared with PAI as prepared in Example II were molded @ 650°F (343°C).

All of the materials studied were molded on the 10 oz. Stokes injection molder under Table 2 molding conditions unless specified otherwise. A 10 oz. Stokes injection molding machine is fitted with a 1:1 compression thermoset screw which can hold approximately 365 grams of the polymer (approximately 0.8 lbs). Since each test tree weighs approximately 23 grams (neat parts) only 1/16th of the complete injection stroke (shot volume) is used during the molding evaluation. Under these conditions (18 second clamp), the total time the polymer is trapped in the barrel is approximately 7.2 minutes (total cycle is 27 seconds). This does not means that the polymer is in the melt state for the complete 7.2 minutes due to the temperature gradient (front to rear) in the barrel.

Polyamide-imide phthalamide copolymer/aromatic sulfone polymer blends flow, under molding conditions, is determined by its cavity pressure which is measured at a point farthest from the sprue. In this test, a pressure transducer is fitted behind a knockout point located behind the flex bar. The higher the cavity pressure, the better the flow thus making for easier mold filling. To determine our polyamide-imide-phthalamide copolymer aromatic sulfone polymer blends melt reactivity, a plot of cavity pressure vs. cycle time is drawn. A stable or non-reactive resin will exhibit good flow characteristics under adverse molding conditions resulting in a melt which is insensitive to a change in cycle time. A reactive polymer will be cycle time dependent in that its viscosity increases with cycle time. This is illustrated by a steep negative cavity

pressure slope. Polyamide-imide-phthalamide copolymer-aromatic sulfone polymer blend samples were all dried for approximately 16 hours at 300°F (149°C) in a hot air circulating oven containing a suitable desiccant.

Polyamide-imide-phthalamide copolymer-aromatic sulfone polymer blend samples were cured in a Blue M hot air programmable oven under a 7-day cycle with 1 day each at 320°F (160°C), 400°F (204°C), 450°F (232°C), 475°F (246°C), respectively, and 3 days at 500°F (260°C). Several tensile bars were cured under a 7-day cycle with 3 days at 515°F (268°C). These parts were measured for shrinkage and were ASTM tested.

In the following examples, Example X, XII and XIII illustrate preferred embodiments of the invention. Examples II, III, VIII and IX are Preparative Examples which illustrate the preparation of polyamide-imide-phthalamides used in preparing compositions according to the invention. Examples I, IV to VII and XI are Comparative Examples illustrating the preparation of polyamide-imides free of phthalamide groups and the production of a blend containing such polyamide-imides. It will be understood that the examples are for illustrative purposes only and do not purport to be wholly definitive with respect to conditions or scope of the invention.

Example I

A 200 ml, round-bottom, 4-neck flask, equipped with a nitrogen inlet tube, stirrer, thermometer, and solids additional funnel, was charged with 99.9 parts by weight of (pbw) p,p'-oxybis (aniline) (OBA), 23.1 pbw metaphenylene-diamine (MPDA) and 604 pbw N-methylpyrrolidone (NMP). When solution at room temperature (72°C) (22°C) was complete, 142.5 pbw 4-trimellitoyl anhydride chloride (4-TMAC), having a percent purity of 99.5 percent ± 0.5 percent as determined from chloride content and 6.8 pbw of trimellitic acid anhydride (TMA) was added over 2.5 hours while maintaining a solution temperature of between about 77—95°F (25—35°C). When addition was complete, the solution was stirred for 3 hours during which time the solution viscosity increased to a Gardner-Holdt value of Z5, or about 110 poises (11 Pas).

Solid polymer was obtained by first pouring the viscous solution into twice its volume of distilled water in a Waring blender and then filtering. The filtrate was washed with 5 increments of 3000 pbw each of distilled water to remove hydrogen chloride that had been generated during reaction.

The solid was dried under a vacuum of 20 inches of mercury (67.7 KPa) for 24 hours at 122°F (50°C). The above material was heated for 2 hours in an oven set at 450°F (232°C) to give the final product.

Example II

A 10 gal., glass-lined Pfaudler kettle equipped with a water-cooled jacket and nitrogen inlet was charged with 9.87 lbs (4.48 kg) of m-phenylenediamine, 0.35 lbs (0.16 kg) of trimellitic anhydride and 59.2 lbs (26.86 kg) of N-methylpyrrolidone. After solution had occurred under a nitrogen purge, an intimate blend of 9.52 lbs (4.32 kg) of 4-trimellitoyl anhydride chloride and 9.17 lbs of isophthaloyl dichloride was added over 2.5 hrs keeping the temperature below 35°C. The resulting viscous solution was brought to 50°C. When the Gardner viscosity had reached a Z3 viscosity, the solution was precipitated by passage through a Fitzpatrick comminuting mill. The polymer product was washed five times with deionized water followed by air-drying on a filter for 3 days. The product was then brought to a solids content of 98.3 percent by heating in a forced air oven for 2 hrs at 470°F (243°C).

Example III

Metaphenylenediamine (540 g) and acetic acid (900 ml) were placed in a five-liter, three-necked, round-bottom flask, equipped with mechanical stirrer, pressure equalizing addition funnel and nitrogen sparge tube, and distillation head and condenser. The nitrogen sparge was set at 300 cc/min and 765 g of acetic anhydride were added over 5 min. This was followed by the addition of 415 g of isophthalic acid and 480 g of trimellitic anhydride. The temperature of the bottom half of the spherical heating mantle surrounding the flask was set at 700°F (371°C) and the top half of the mantle was heated with a Variac set at 50. After 105 min, 1730 ml of distillate was collected and the polymer had become very viscous. The heat was turned off and the polymer was cooled under nitogen.

Example IV

A 690 gram portion of dimethylacetamide (DMAC) was stirred and cooled to 5°C with dry nitrogen purging to keep the system dry. An intimate mixture composed of 252.2 grams of 4-TMAC, 119.0 grams of p',p-methylene-bis(analine), and 120.0 grams of p,p'-oxybis(aniline) was then added to the solvent over a period of 30 minutes. The temperature of the reaction was allowed to rise to 50°C. At that temperature is was controlled by means of an ice bath. An additonal 100 grams of DMAC were then added to wash in all solids, and the reaction continued for another 3 ½ hours at 50°C. The reaction solution was then poured into a large excess of rapidly-agitated water, whereupon precipitation of the copolymer took place. The solids were then washed several times with distilled water and soaked overnight. Finally, the solids were dried at 120°F (49°C). A 443 gram yield of the copolymer was obtained.

Example V

A solution consisting of 533.3 grams of NMP, 300 grams of DMAC, and 58.0 grams of propylene oxide was stirred and cooled to 8°C. A mixture of 168.5 grams of 4-TMAC, 80.1 grams of OBA and 79.3 grams of

MBA was then added to the solvent over a period of 50 minutes. During this time the reaction was allowed to warm to 36°C. An additional 66.7 grams of NMP were added to wash in all solids, then the reaction mixture was heated to 50°C and held at that temperature for 3½ hours. The solution was then filtered.

Example VI

The general procedure for preparing a copolymer containing three diamines is illustrated by the reaction of OBA, MPDA and MBA and 4-TMAC in DMAC. Thus, a 242.0 gram portion of OBA (1.21 moles), a 130.7 gram portion of MPDA (1.21 moles) and a 239.6 gram portion of MBA (1.21 moles) were dissolved in 3,900 grams DMAC contained in a 6-liter flask, equipped with a nitrogen purge, stirrer, addition funnel and thermometer. A 765 gram portion of 4-TMAC (3.63 moles) in flake or lump form was then added to the solution in portions, over a period of 90 minutes. The reaction exotherm was allowed to raise the temperature to about 35°C. The reaction temperature was maintained at 33°—38°C for the remainder of the 4-TMAC addition using cooling water when necessary. After the TMAC addition was completed, any residual TMAC clinging to the addition funnel was completely washed into the reaction solution with 70 grams DMAC. A heating mantle was applied to the reaction flask and the temperature quickly raised (about 20 min) to 50°C. The reaction solution was stirred at 50°C for 90 minues and then the solution precipitated by admixing with water. Prior to precipitation the solution viscosity was about 7.5 stokes ($cm^2/s$) (25°C, 20 percent solids). The polymer was precipitated in distilled water in a model D, W. J. Fitzpatrick Company, comminuting machine (Fitz mill). After precipitation, the polymer was washed with distilled water to aqueous pH 4 to 5 (3 to 4 hours washing time), then filtered onto large Buchner funnels. The polymer was dried overnight by drawing air through the funnels, then finally dried in an aeromat drier at 30°—35°C for 12—15 hours.

Example VII

A 78 gram amount of the copolymer in powdered form, made according to the procedure set forth in Example I, was heated at 550°F (288°C) for about 1 hour. It was then cooled and charged cold into a mold preheated in the press to about 600°F (316°C) to about 650°F (343°C). A maximum pressure of 4,200 psi (29.0 MPa) was applied over a 25 minute period and thereafter the mold and contents cooled to 500°F (260°C) under a pressure of 2,100 psi (14.5 MPa) and the molded item immediately ejected. A disk measuring 5½ inches (140 mm) in diameter and ⅛ inch (3.2 mm) thick had been formed.

Example VIII

A 10 gal, glass-lined Pfaudler kettle equipped with a water-cooled jacket and nitrogen inlet was charged with 9.87 lbs (4.48 kg) of m-phenylenediamine, 0.35 lbs (0.16 kg) of trimellitic anhydride and 59.2 lbs (26.85 kg) of N-methylpyrrolidone. After solution had occurered under a nitrogen purge, an intimate blend of 9.52 lbs (4.32 kg) of 4-trimellitoyl anhydride chloride and 9.17 lbs (4.16 kg) of isophthaloyl dichloride was added over 2.5 hrs while keeping the temperature below 35°C. The resulting viscous solution was brought to 50°C. When the Gardner viscosity had reached a Z1 viscosity the solution was precipitated by passage through a Fitzpatrick comminuting mill. The polymer product was washed five times with deionized water followed by air-drying on a filter for 3 days. The product was then brought to a solids content of >98% by heating in a force air oven for 2 hrs at 470°F (243°C).

Example IX

A round-bottom, 2000-ml, 4-necked flask was charged with 1045 g dry N-methylpyrrolidone (NMP), 16.2 g (1.5 mol) m-phenylenediamine (MPDA), and 4.3 g trimellitic anhydride (TMA) (0.0225 mol). The flask was equipped with a mechanical stirrer, nitrogen inlet tube, thermometer, and a liquid addition funnel. During solution of the diamine and TMA, the addition funnel was charged with 248.0 g (1.178 mol) 4-trimellitoyl anhydride chloride (4-TMAC) and 60.9 g (0.30 mol) isophthaloyl dichloride ($IPCl_2$) and melted at 80°C. When melting was complete, the solution of acid chlorides was added to the diamine/TMA solution over a 2-hour period at 25°—35°C. After addition was complete, the viscous solution was heated to 50°C and held for 1 hour.

Example X

Polyamide-imide/aromatic sulfone polymer blends can be prepared by physically blending the constituents together, either pellet to pellet, powder to powder, powder to pellet, or pellet to powder, with or without a compounding step prior to injection molding. It is preferred that the constituents are melt compounded, especially on a twin-screw extruder.

The alloys have been melt compounded on a Werner & Pfleiderer twin-screw extruder (ZSK-30) prior to molding unless specified otherwise. All samples have had at least 0.5 percent PTFE added as a fabrication aid.

Example XI

When the prepared polyamide-imide of Example I is alloyed with 10%, 20%, or 30% by polymer weight of polyethersulfone (Victrex 600P), significant improvements in Dart impact resistance of the unfilled polyamide-imide are seen. Each alloy was injection molded into 60 mil (1.5 mm) plaques and then cured on

a standard 7-day cycle with 3 days at 505°F (263°C). The impact results of the as-molded and cured PAI alloys are reported below. Notice the significant improvement in Dart impact after the PAI and its alloys are cured. The PES does not restrict the excellent curing characteristics of the amide-imide allowing the alloys to build properties during cure. The data below illustrate the importance of curing and suggest that the as-molded alloy has little, if any, commercial use due to its poor mechanical properties.

| % Polyethersulfone | Dart Impact, In-Lbs (J) As-Molded | Dart Impact, In-Lbs (J) Cured @ 505°F (263°C) |
|---|---|---|
| 0 | 0.83 (0.091) | 20.3 (2.23) |
| 10 | 0.8 (0.088) | 33.2 (3.65) |
| 20 | 1.90 (0.209) | 126.7 (13.94) |
| 30 | 1.60 (0.176) | 101.8 (11.20) |

Example XII

When the prepared polyamide-imide of Example II is alloyed with 20% by polymer weight of polyethersulfone, significant improvement in the impact strength of the unfilled polyamide-imide is seen. The neat polyamide-imide as prepared in Example II was so weak and brittle that during molding the test specimen shattered upon ejection. The example II prepared PAI when blended with PES according to the process of Example X molded well with no sign of part cracking. Below are typical impact values of the cured alloy.

| % Polyethersulfone | Impact Properties: Notched Izod ft-lbs/in (J/m) | Impact Properties: Dart Impact in-lbs (J) |
|---|---|---|
| 0 | 0.3 (16.0) | <2.0 (<0.22) |
| 20 | 1.20 (64.0) | 21.4 (2.35) |
| 30 | 1.00 (53.3) | — |

Example XIII

Fiber filled polyamide-imide-phthalamide copolymers cannot be economically molded into crack-free thick wall parts which have cross-sections greater than 250 mils (6.35 mm). It is believed that the as-molded strength and toughness properties of these polyamide-imides cannot withstand the molding cooldown stresses resulting in parts with internal cracks which are not commercially acceptable. We have found that when polyethersulfone is alloyed with a fiber filled polyamide-imide-phthalamide copolymer, the as-molded strength and toughness properties are drastically improved and that as a result thicker wall parts can be molded crack-free.

40% Glass Fiber Filled Polyamide-imide with % Polyethersulfone

| | O | 10 | 20 |
|---|---|---|---|
| As Molded Properties | | | |
| Tensile Strength PSI (MPa) | 10,800 (74.5) | 20,000 (137.9) | 18,900 (130.3) |
| Tensile Elongation % | 2.0 | 3.1 | 3.0 |
| Izod Impact, Notched Ft-lbs/in (J/m) | 1.0 (53.3) | 1.62 (86.3) | 1.42 (75.7) |
| Flexural Modulus PSI (MPa) | 2,080,000 (14339) | 2,000,000 (13788) | 1,950,000 (13443) |
| HDT, °F (°C) | 500 (260) | 511 (266) | 504 (262) |
| Thick wall molding (% Crack-free parts)* | | | |
| 4″ × 0.5″ (10.2 cm × 1.3 cm) Thick Disc | 0 | 10 | 50 |
| 5.5″ × 0.43″ (14.0 cm × 1.1 cm) Thick Disc | 5 | — | 86 |

*Parts were X-rayed with a *Hewlett-Packard* 4380500 X-ray System.

## Claims

1. A composition comprising (a) about 99.9 to about 50 per cent by weight of an amide-imide phthalamide copolymer which comprises recurring polyamide A units of:

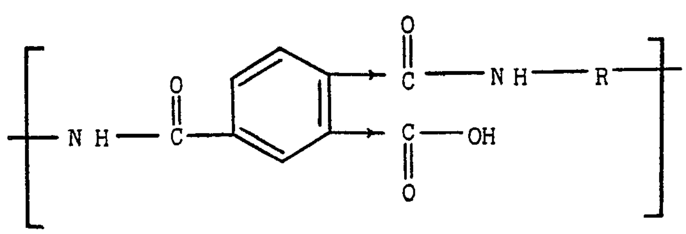

which are capable of undergoing imidization, and polyamide B units of:

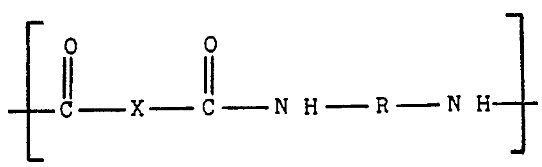

wherein the molar ratio of A units to B units is about 80 to about 20 to about 20 to about 80, wherein the R groups in the copolymer, which may be the same or different are selected from divalent aromatic hydrocarbon radicals and wherein the X groups, which may be the same or different are selected from divalent aromatic radicals and → denotes isomerization and (b) about 0.1 to about 50 percent by weight of one or more polyethersulfones which comprise recurring units of:

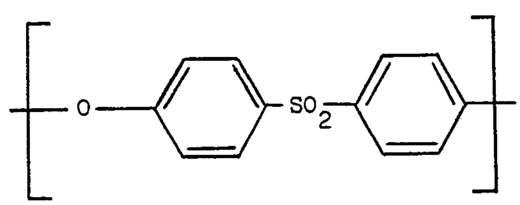

such weight percents being based on the total weight of (a) and (b).

2. A composition comprising (a) about 99.9 to about 50 per cent by weight of an amide-imide phthalamide copolymer which comprises recurring polyamide-imide A' units of:

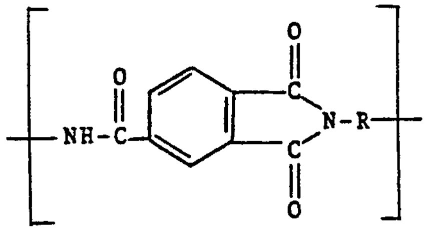

and polyamide B units of:

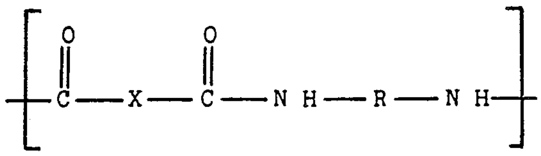

wherein the molar ratio of A' to B units is about 80 to about 20 to about 20 to about 80 and wherein the R groups in the copolymer, which may be the same or different are selected from divalent aromatic hydrocarbon radicals and the X groups, which may be the same or different are selected from divalent aromatic radicals and (b) about 0.1 to about 50 percent by weight of a polyethersulfone which comprises recurring units of:

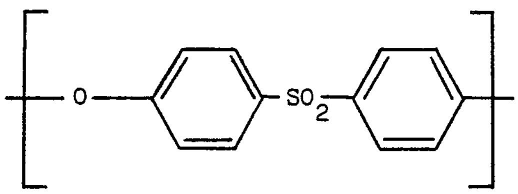

such weight percents being based on the total weight of (a) and (b).

3. A composition according to Claim 1 or Claim 2 wherein each R is a divalent aromatic hydrocarbon radical of from about 6 to about 20 carbon atoms, or two divalent hydrocarbons joined directly or by stable linkages selected from —O—, methylene, —CO—, and $—SO_2—$.

4. A composition according to Claim 3 wherein each R is selected from

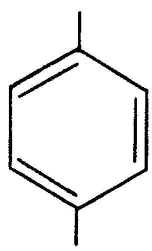 and 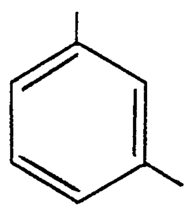 groups.

5. A composition according to any preceding claim wherein X is selected from

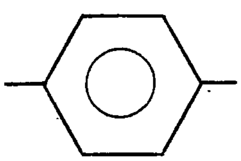 and 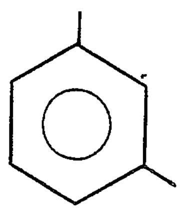 groups.

6. A composition according to Claim 5 wherein X is

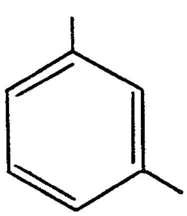 and R is 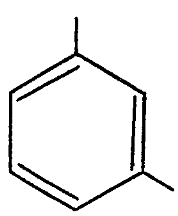

7. A composition according to any preceding claim wherein said amide-imide phthalamide copolymer comprises about 90 to about 60 percent by weight of the total composition and said polyethersulfone comprises about 10 to about 40 percent by weight of the total composition.

8. A composition according to any preceding claim in the form of a molded object.

9. A molded object according to Claim 8 wherein the molded object comprises about 10 to about 80 weight percent of glass fiber, glass beads, graphite fibre, graphite powder or graphite coated with an aromatic sulfone polymer.

10. A filled composition comprising (1) about 20 to about 90 by weight percent by weight of the total composition of a polymer blend said blend comprising (a) about 99.9 to about 50 percent by weight of an amide-imide phthalamide copolymer which comprises recurring polyamide-imide A' units of:

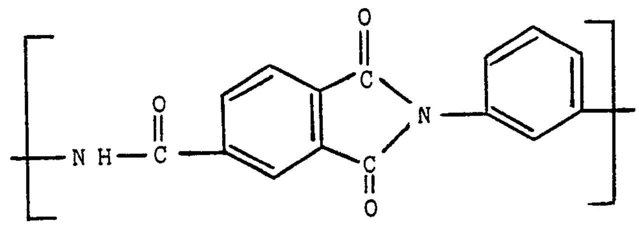

and polyamide B units of:

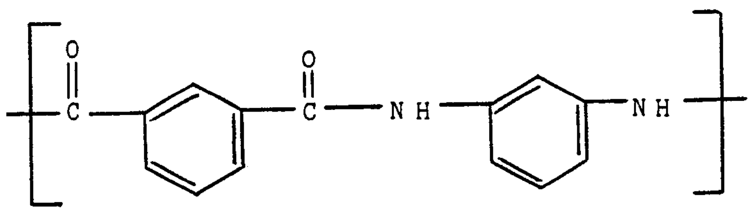

wherein the molar ratio of A' to B units is about 80 to about 20 to about 20 to about 80, and (b) about 0.1 to about 50 weight percent of a polyethersulfone which comprises recurring units of:

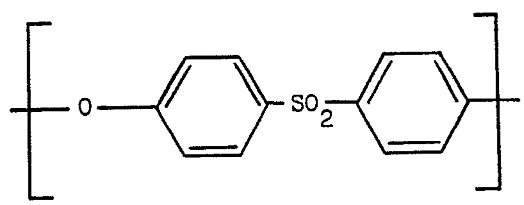

the percentages by weight of components (a) and (b) being based on the total weight of said components and (2) about 80 to about 10 per cent by weight of the total composition of a filler selected from glass fiber, glass beads, mineral fillers, graphite fiber and graphite powder.

11. A filled composition according to Claim 10 wherein said filler is coated with an aromatic sulfone polymer.

12. A process for improving the impact resistance of an amide-imide phthalamide copolymer said copolymer comprising recurring polyamide-imide A' units of:

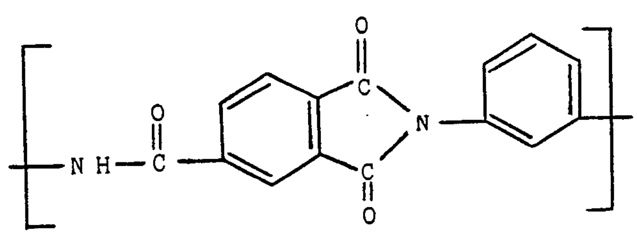

and polyamide B units of:

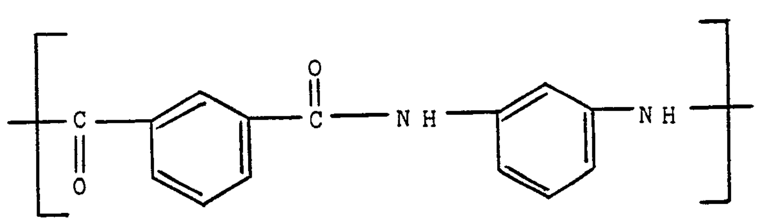

wherein the molar ratio of A' to B units is between about 80 to about 20 to about 20 to about 80 said process comprising adding a polyethersulfone which comprises recurring units of:

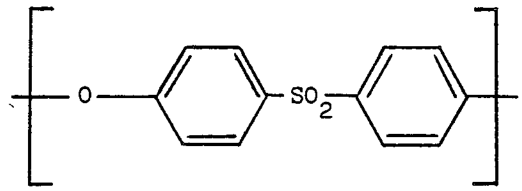

in an amount such that said polyethersulfone comprises about 0.1 to about 50 per cent by weight of the final composition.

13. A process according to Claim 12 wherein said polyethersulfone comprises about 10 to about 40 per cent by weight of the final composition.

**Patentansprüche**

1. Zusammensetzung aus (a) etwa 99,9 bis etwa 50 Gewichtsprozent eines Amidimidphthalimidcopolymerisats, das wiederkehrende Einheiten aus einem Polyamid A

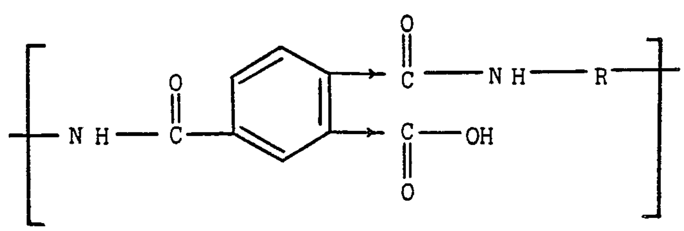

welche eine Imidierung erfahren können, und aus einem Polyamid B

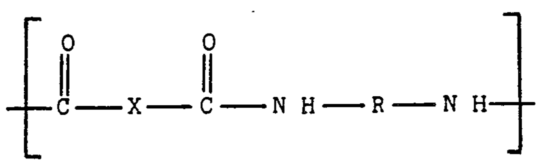

enthält, worin das Molverhältnis aus den Einheiten A und den Einheiten B etwa 80 bis etwa 20 zu etwa 20 bis etwa 80 beträgt, die Gruppen R in dem Copolymerisat gleich oder verschieden sein können und aus zweiwertigen aromatischen Kohlenwassersstoffresten ausgewählt sind und die Gruppen X gleich oder verschieden sein können und aus zweiwertigen aromatischen Resten ausgewählt sind und worin der Pfeil ≫ eine Isomerisierung bedeutet, und aus (b) etwa 0,1 bis etwa 50 Gewichtsprozent eines oder mehrerer Polyethersulfone, das die folgenden wiederkehrenden Einheiten enthält

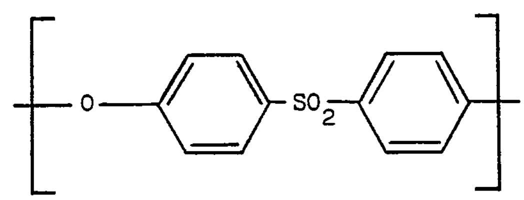

wobei sich diese Gewichtsprozentangabe auf das Gesamtgewicht aus den Komponenten (a) und (b) bezieht.

2. Zusammensetzung aus (a) etwa 99,9 bis etwa 50 Gewichtsprozent eines Amidimidphthalimidcopolymerisats, das wiederkehrende Einheiten aus einem Polyamidimid A'

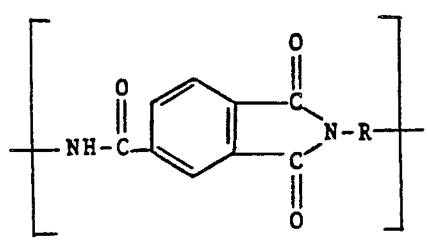

und aus einem Polyamid B

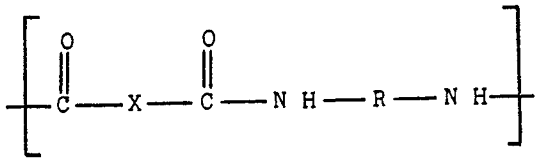

enthält, worin das Molverhältnis aus den Einheiten A' und den Einheiten B etwa 80 bis etwa 20 zu etwa 20 bis etwa 80 beträgt, die Gruppen R in dem Copolymerisat gleich oder verschieden sein können und aus zweiwertigen aromatischen Kohlenwasserstoffresten ausgewählt sind und die Gruppen X gleich oder verschieden sein können und aus zweiwertigen aromatischen Resten ausgewählt sind und worin der Pfeil → eine Isomerisierung bedeutet, und aus (b) etwa 0,1 bis etwa 50 Gewichtsprozent eines oder mehrerer Polyethersulfone, das die folgenden wiederkehrenden Einheiten enthält.

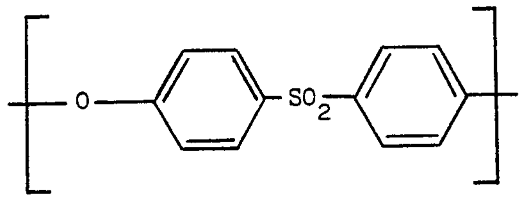

wobei sich diese Gewichtsprozentangabe auf das Gesamtgewicht aus den Komponenten (a) und (b) bezieht.

3. Zusammensetzung nach Anspruch 1 oder 2, dadurch gekennzeichnet, daß jede der Gruppen R ein zweiwertiger aromatischer Kohlenwasserstoffrest mit etwa 6 bis etwa 20 Kohlenwasserstoffatomen oder zwei zweiwertige Kohlenwasserstoffreste bedeutet, die direkt oder durch die Brücken —O—, Methylen, —CO— und/oder —$SO_2$— miteinander verbunden sind.

4. Zusammensetzung nach Anspruch 3, dadurch gekennzeichnet, daß jede der Gruppen R ausgewählt ist aus den Gruppen

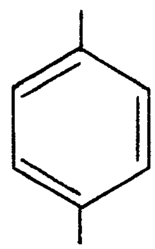

und

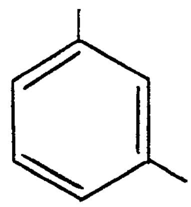

5. Zusammensetzung nach irgend einem der vorhergehenden Ansprüche, dadurch gekennzeichnet, daß X aus den folgenden Gruppen ausgewählt ist

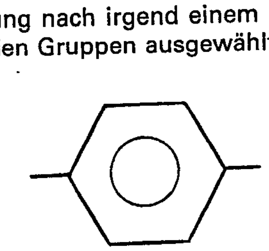

und

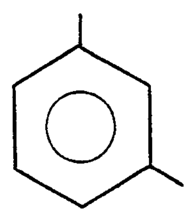

6. Zusammensetzung nach Anspruch 5, dadurch gekennzeichnet, daß X die Gruppe

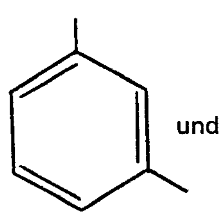

und R die Gruppe

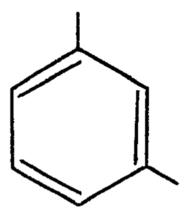

bedeutet.

7. Zusammensetzung nach irgendeinem der vorhergehenden Ansprüche, dadurch gekennzeichnet, daß das Amidimidphthalimidcopolymerisat etwa 90 bis etwa 60 Gewichtsprozent der gesamten Zusammensetzung ausmacht und das Polyethersulfon etwa 10 bis etwa 40 Gewichtsprozent der gesamten Zusammensetzung ausmacht.

8. Zusammensetzung nach irgendeinem der vorhergehenden Ansprüche, dadurch gekennzeichnet, daß die als Formgegenstand vorliegt.

9. Formgegenstand nach Anspruch 8, dadurch gekennzeichnet, daß er etwa 10 bis etwa 80

Gewichtsprozent Glasfasern, Glasperlen, Graphitfasern, Graphitpulver oder mit einem aromatischen Sulfonpolymer überzogenes Graphit enthält.

10. Füllstoffhaltige Zusammensetzung aus (1) etwa 20 bis etwa 90 Gewichtsprozen, bezogen auf die gesamte Zusammensetzung, einer Polymermischung aus (a) etwa 99,9 bis etwa 50 Gewichtsprozent eines Amidimidphthalimidcopolymerisats, das wiederkehrende Einheiten aus einem Polyamidimid A'

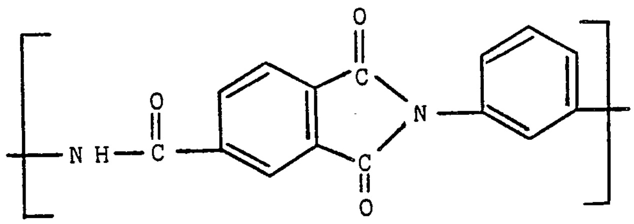

und aus einem Polyamid B

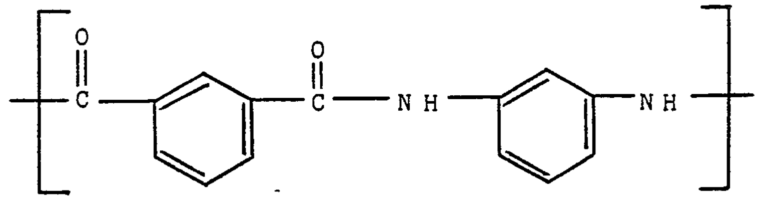

enthält, worin das Molverhältnis aus den Einheiten A' und den Einheiten B etwa 80 bis etwa 20 zu etwa 20 bis etwa 80 beträgt, und aus (b) etwa 0,1 bis etwa 50 Gewichtsprozent eines Polyethersulfons, das die folgenden wiederkehrenden Einheiten enthält

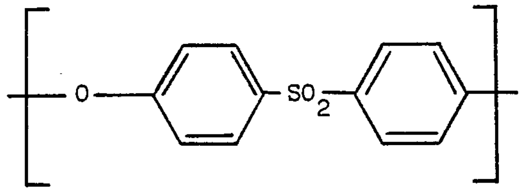

wobei sich diese Gewichtsprozentangabe auf das Gesamtgewicht aus den Komponenten (a) und (b) bezieht und aus (2) etwa 80 bis etwa 10 Gewichtsprozent, bezogen auf die gesamte Zusammensetzung, eines Füllstoffs, der ausgewählt ist aus Glasfasern, Glasperlen, mineralischen Füllstoffen, Graphitfasern und/oder Graphitpulver.

11. Füllstoffhaltige Zusammensetzung nach Anspruch 10, dadurch gekennzeichnet, daß der Füllstoff mit einem aromatischen Sulfonpolymer überzogen ist.

12. Verfahren zur Verbesserung der Schlagfestigkeit eines Amidimidphthalimidcopolymerisats, das wiederkehrende Einheiten aus einem Polyamidimid A'

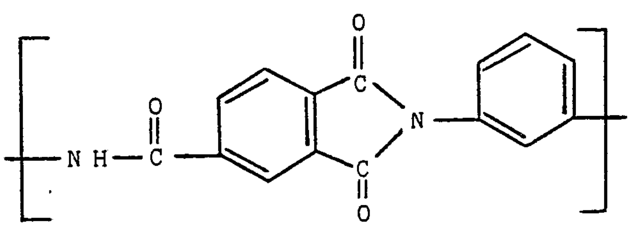

und aus einem Polyamid B

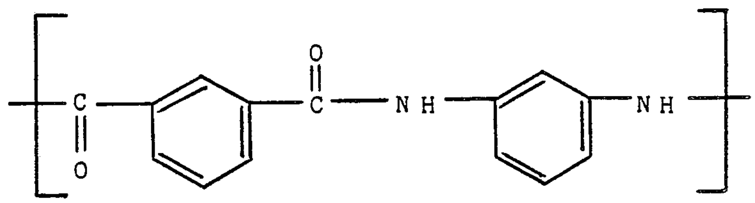

enthält, worin das Molverhältnis aus den Einheiten A' und den Einheiten B etwa 80 bis etwa 20 zu etwa 20 bis etwa 80 beträgt, dadurch gekennzeichnet, daß ein Polyethersulfon, das wiederkehrende Einheiten der Formel

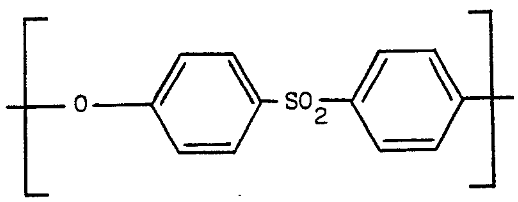

enthält, in einer solchen Menge zugesetzt wird, daß dieses Polyethersulfon etwa 0,1 bis etwa 50 Gewichtsprozent der fertigen Zusammensetzung ausmacht.

13. Verfahren nach Anspruch 12, dadurch gekennzeichnet, daß das Polyethersulfon etwa 10 bis etwa 40 Gewichtsprozent der fertigen Zusammensetzung ausmacht.

**Revendications**

1. Une composition comprenant (a) environ 99,9 à environ 50% en poids d'un copolymère amide-imide de phtalamide qui comprend des motifs répétés de polyamide A:

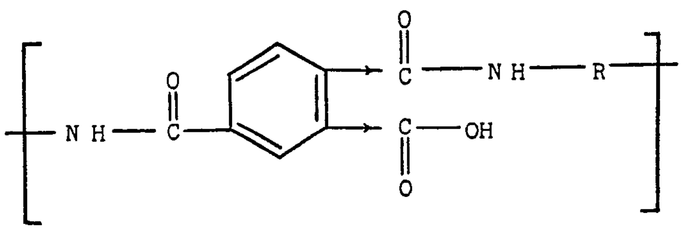

qui peuvent subir une imidation, et des motifs de polyamide B:

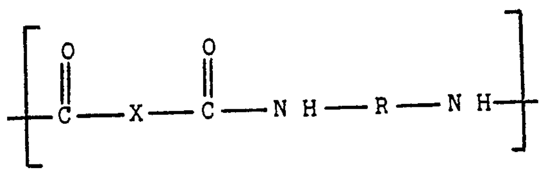

dans laquelle le rapport molaire des motifs A aux motifs B est d'environ 80 à environ 20 à environ 20 à environ 80, où les groupes R dans le copolymère, qui peuvent être semblables ou différents, sont choisis parmi les radicaux hydrocarbures aromatiques divalents et où les groupes X, qui peuvent être semblables ou différents, sont choisis parmi les radicaux aromatiques divalents et → indique une isomérisation, et (b) environ 0,1 à environ 50% en poids d'une ou plusieurs polyéthersulfones qui comprennent les motifs répétés

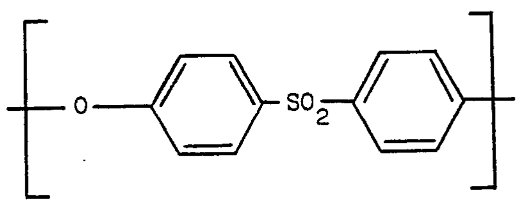

ces pourcentages pondéraux étant exprimés relativement au poids total de (a) et (b).

2. Une composition comprenant (a) environ 99,9 à environ 50% en poids d'un copolymère amide-imide de phtalamide qui comprend des motifs répétés de polyamide-imide A':

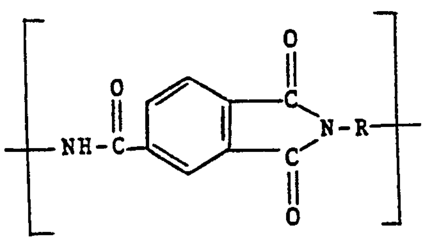

et des motifs de polyamide B:

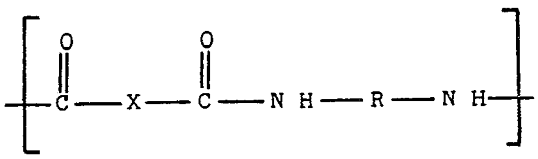

dans laquelle le rapport molaire des motifs A′ aux motifs b est d'environ 80 à environ 20 à environ 20 à environ 80 et où les groupes R dans le copolymère, qui peuvent être semblables ou différents, sont choisis parmi les radicaux hydrocarbures aromatiques divalents, et les groupes X, qui peuvent être semblables ou différents, sont choisis parmi les radicaux aromatiques divalents, et (b) environ 0,1 à environ 50% en poids d'une polyéthersulfone qui comprend des motifs répétés:

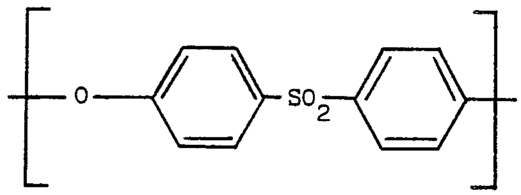

ces pourcentages pondéraux étant exprimés relativement au poids total de (a) et (b).

3. Une composition selon la revendication 1 ou la revendication 2, dans laquelle chaque R est un radical hydrocarbure aromatique divalent d'environ 6 à environ 20 atomes de carbone, ou deux hydrocarbures divalents unis directement ou par des liaisons stables choisis parmi —O—, méthylène, —CO— et $—SO_2—$.

4. Une composition selon la revendication 3, dans laquelle chaque R est choisi parmi les groupes:

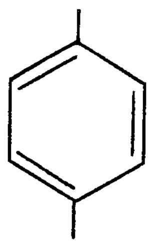

et

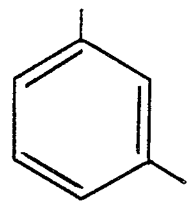

5. Une composition selon l'une quelconque des revendications précédentes, dans laquelle X est choisi parmi les groupes

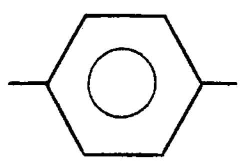

et

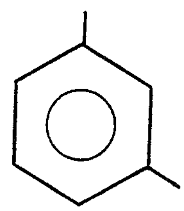

6. Une composition selon la revendication 5, dans laquelle X est

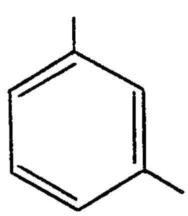

et R est

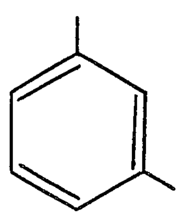

7. Une composition selon l'une quelconque des revendications précédentes, dans laquelle ledit copolymère amide-imide de phtalamide constitue environ 90 à environ 60% du poids de la composition totale et ladite polyéthersulfone constitue environ 10 à environ 40% du poids de la composition totale.

8. Une composition selon l'une quelconque des revendications précédentes sous la forme d'un objet moulé.

9. Un objet moulé selon la revendication 8, l'objet moulé comprenant environ 10 à environ 80% en poids de fibres de verre, de perles de verre, de fibres de graphite, de poudre de graphite ou de graphite revêtu d'un polymère de sulfone aromatique.

10. Une composition contenant une charge comprenant (1) environ 20 à environ 90% du poids total de la composition d'un mélange de polymères, ce mélange comprenant (a) environ 99,9 à environ 50% en

poids d'un copolymère amide-imide de phtalamide qui comprend des motifs répétés de polyamide-imide A'

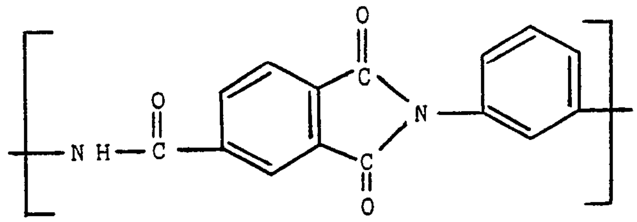

et des motifs de polyamide B

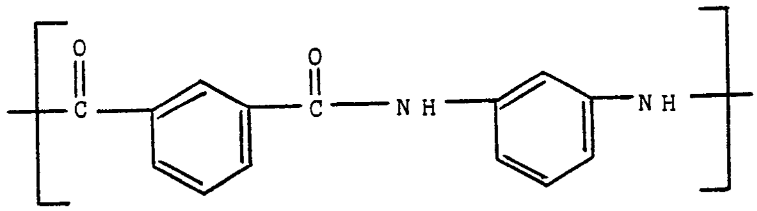

dans laquelle le rapport molaire des motifs A' aux motifs B est d'environ 80 à environ 20 à environ 20 à environ 80 et (b) environ 0,1 à environ 50% en poids d'une polyéthersulfone qui comprend des motifs répétés

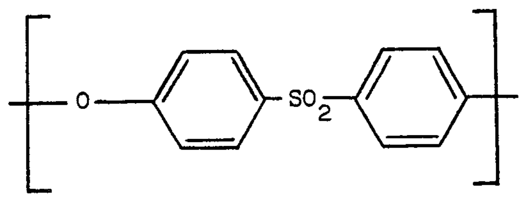

les pourcentages en poids des composants (a) et (b) étant exprimés relativement au poids total desdits composants, et (2) environ 80 à environ 10% du poids total de la composition d'une charge choisie parmi les fibres de verre, les perles de verre, les charges minérales, les fibres de graphite et la poudre de graphite.

11. Une composition contenant und charge selon la revendication 10, dans laquelle ladite charge est revêtue d'un polymère de sulfone aromatique.

12. Un procédé pour améliorer la résistance au choc d'un copolymère amide-imide de phtalamide, ledit copolymère comprenant des motifs répétés de polyamide-imide A':

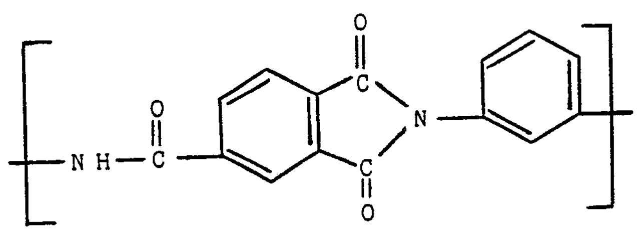

et des motifs de polyamide B:

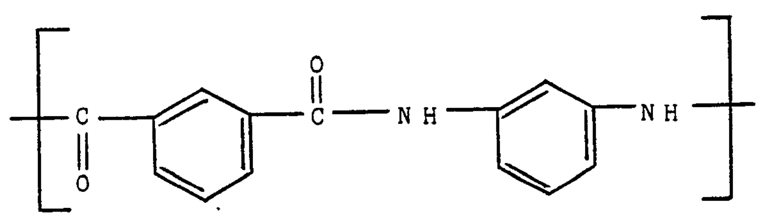

dans lequel le rapport molaire des motifs A' aux motifs B est entre environ 80 et environ 20 à environ 20 à environ 80, ce procédé comprenant l'addition d'une polyéthersulfone comprenant des motifs répétés:

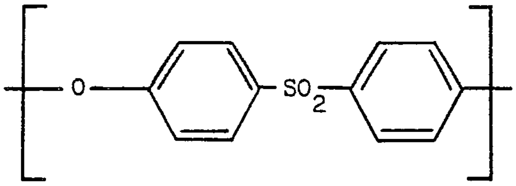

en une quantité telle que ladite polyéthersulfone constitue environ 0,1 à environ 50% du poids de la composition finale.

13. Un procédé selon la revendication 12, dans lequel ladite polyéthersulfone constitue environ 10 à environ 40% du poids de la composition finale.